# EUROPEAN PATENT APPLICATION

(11) **EP 4 819 710 A2**
(43) Date of publication of application: **07.10.2026**
(21) Application number: 26199076.6
(22) Date of filing: 17.02.2023
(51) Int. Cl.: H04W 72/00

(54) **METHOD AND APPARATUS FOR ACQUIRING AND INDICATING TIMING ADVANCE VALUES IN A WIRELESS COMMUNICATION SYSTEM**

(62) Document number(s) of the earlier application(s) in accordance with Art. 76 EPC: 23713271.7 / 4 649 741
(71) Applicant: Google LLC, Mountain View, CA 94043 (US)
(72) Inventor: The designation of the inventor has not yet been filed
(74) Representative: Marks & Clerk GST

(57) **Abstract**

Methods, systems, and techniques are disclosed herein for acquiring and indicating timing advance values for random access procedures. The disclosed methods and techniques may be used in operations of L1/L2 trigger mobility (LTM) or multi-transmission-reception-point (mTRP) with two timing advance (2TA). At a high level, this disclosure pertains to performing random access (RA) procedure in LTM, mTRP 2TA, or similar procedures involving two or more cells or TRPs. The cell switching may involve some procedures and/or issues regarding TA acquisition and TA indication. For examples, a user equipment (UE) may need to acquire (e.g., via performing an RA procedure) a TA value for a candidate cell or target cell prior to completion of a LTM procedure. The disclosure also teaches how to indicate TA value applicable for a candidate cell or a target cell.

## Description

### FIELD

This disclosure relates generally to wireless communications and, more particularly, to performing a random access (RA) procedure.

### BACKGROUND

Multi-transmission-and-reception-point (mTRP or M-TRP) may be used to improve interaction between physical serving cell and neighboring cell(s). A UE may communicate with a network (NW) entity (e.g., a base station (BS) or a TRP) in a physical serving cell and/or a neighboring cell. A neighboring cell may be a cell broadcasting a physical cell ID (PCI) different from that of the serving cell. The UE may be served by the network entity via two TRPs (or two TRP clusters/sets), where one is located in the physical serving cell and the other is located in the neighboring cell.

An L1/L2 trigger mobility (LTM) procedure may be used for reducing latency when performing cell switching. In legacy, cell switching may require many higher layer message exchange and reconfiguration, which also induces longer latency. A LTM procedure may help resolve this latency issue. Before cell switching, the network entity may have configured one or more candidate cell configuration(s) to the UE. Afterwards, the network entity may transmit a cell switch command (CSC) to the UE, and the UE may realize which candidate cell configuration to apply and which cell to move toward (e.g., UE moves from source cell to target cell). Conventional practice does not include whether/how to acquire and indicate TA value for a target cell prior to completion of LTM procedure. A similar lack of specificity also occurs in inter-cell M-TRP 2TA operations, such as when, one TRP is from the physical serving cell, and the other TRP is from a neighboring cell.

### SUMMARY

The present disclosure provides methods, systems, and techniques for acquiring and indicating timing advance values for random access procedures. The disclosed methods and techniques may be used in operations of L1/L2 trigger mobility (LTM) or multi-transmission-reception-point (mTRP) with two timing advance (2TA). At a high level, this disclosure pertains to performing random access (RA) procedure in LTM, mTRP 2TA, or similar procedures involving two or more cells or TRPs. The cell switching may involve some procedures and/or issues regarding TA acquisition and TA indication. For examples, a user equipment (UE) may need to acquire (e.g., via performing an RA procedure) a TA value for a candidate cell or target cell prior to completion of a LTM procedure. The disclosure also includes how to indicate TA value applicable for a candidate cell or a target cell.

The LTM procedure is intended for reducing latency when performing cell switching. In legacy, cell switching may require many higher layer message exchange and reconfiguration, which also induces longer latency. A LTM procedure may help resolve this latency issue. Before cell switching, the network entity may have configured one or more candidate cell configuration(s) to the UE. Afterwards, the network entity may transmit a cell switch command (CSC) to the UE, and the UE may realize which candidate cell configuration to apply and which cell to move toward (e.g., UE moves from source cell to target cell).

Existing techniques do not include whether/how to acquire and indicate TA value for a target cell prior to completion of LTM procedure. A similar lack of specificity also occurs in inter-cell M-TRP 2TA operations, such as when, one TRP is from the physical serving cell, and the other TRP is from a neighboring cell. The present disclosure provides methods and techniques addressing how to acquire and indicate TA value for a target cell or a neighboring cell. For example, this disclosure provides methods and procedures for TA value acquisition for a target cell prior to completion of a LTM procedure, TA value indication for a target cell prior to completion of a LTM procedure, as well as enhancements and modifications to RA procedures. The disclosed methods and procedures may similarly apply to mTRP 2TA operations (at least for inter-cell M-TRP 2TA operation).

According to general aspects of this disclosure, a method by a UE includes receiving, from a first cell, a physical downlink control channel (PDCCH) order triggering a random access (RA) procedure associated with a second cell. The UE acquires a timing advance (TA) value based on the PDCCH order regarding the second cell by skipping an RA response (RAR) associated with the RA procedure. The UE transmits, based on the TA value, an uplink transmission to the second cell.

According to general aspects of this disclosure, a method includes sending, by a first cell to a UE, a PDCCH order triggering a random access (RA) procedure associated with a second cell. The method includes receiving, at the second cell, an uplink transmissions from the UE, the uplink transmissions applying a timing advance (TA) value acquired based on the PDCCH order regarding the second cell by skipping an RA response (RAR) associated with the RA procedure.

### BRIEF DESCRIPTION OF THE DRAWINGS

Fig. 1A is a block diagram of an example system in which a distributed base station and a user equipment (UE) may implement the techniques of this disclosure.
Fig. 1B is a block diagram of an example base station including a central unit (CU) and a distributed unit (DU) of a distributed base station that may operate in the system of Fig. 1A.
Fig. 2A is a block diagram of an example protocol stack according to which the UE of Figs. 1A-B may communicate with base stations.
Fig. 2B is a block diagram of an example protocol stack according to which the UE of Figs. 1A-B may communicate with a DU and a CU of a base station.
Fig. 3A illustrates an example signaling diagram between a UE and a network entity (NW), in accordance with aspects of this disclosure.
Fig. 3B illustrates an example signaling diagram between the UE and the NW, in accordance with aspects of this disclosure.
Fig. 4 illustrates an example signaling diagram between the UE and the NW, in accordance with aspects of this disclosure.
Fig. 5 illustrates an example flowchart of a method performed by a UE, in accordance with aspects of this disclosure.
Fig. 6 illustrates an example flowchart of a method performed by a UE, in accordance with aspects of this disclosure.
Fig. 7 illustrates an example flowchart of a method performed by a UE, in accordance with aspects of this disclosure.
Fig. 8 illustrates an example flowchart of a method performed by a UE, in accordance with aspects of this disclosure.
Figs. 9A and 9B illustrate example flowcharts of a method performed by a UE, in accordance with aspects of this disclosure.
Fig. 10 illustrates an example flowchart of a method performed by a UE, in accordance with aspects of this disclosure.
Fig. 11 illustrates an example flowchart of a method performed by a network entity, in accordance with aspects of this disclosure.
Fig. 12 illustrates an example flowchart of a method performed by a network entity, in accordance with aspects of this disclosure.
Fig. 13 is a diagram illustrating a hardware implementation for an example UE apparatus.
Fig. 14 is a diagram illustrating a hardware implementation for one or more example network entities.

Like numerals indicate like elements.

### DETAILED DESCRIPTION

The present disclosure provides methods, systems, and techniques for acquiring and indicating timing advance values for random access procedures. The disclosed methods and techniques may be used in operations of L1/L2 trigger mobility (LTM) or multi-transmission-reception-point (mTRP) with two timing advance (2TA). At a high level, this disclosure pertains to performing random access (RA) procedure in LTM, mTRP 2TA, or similar procedures involving two or more cells or TRPs. The cell switching may involve some procedures and/or issues regarding TA acquisition and TA indication. For examples, a user equipment (UE) may need to acquire (e.g., via performing an RA procedure) a TA value for a candidate cell or target cell prior to completion of a LTM procedure. The disclosure also includes how to indicate TA value applicable for a candidate cell or a target cell.

In particular, the present disclosure pertains to performing an RA procedure for an LTM procedure. The RA procedure may involve some procedures and/or issues regarding TA acquisition and TA indication. For example, the present disclosure provides methods and techniques on how to acquire TA value for a candidate cell or target cell prior to completion of a LTM procedure (e.g., via performing an RA procedure). This disclosure further provides techniques on how to indicate TA value applicable for a candidate cell or a target cell, or for a serving cell and a neighboring cell (e.g., in multiple-TRP (M-TRP) 2TA operations). As such, a UE and/or network (NW) entity may acquire TA value for a LTM procedure or M-TRP 2TA operation without requiring an RAR. Further, the UE and the network entity may perform a streamlined procedure for indicating/deriving TA value for a target cell or a TRP in a neighboring cell at an improved efficiency. This disclosure therefore provides examples for efficient and reliable cell switching procedures.

According to general aspects of this disclosure, a method by a UE includes receiving, from a first cell, a physical downlink control channel (PDCCH) order triggering a random access (RA) procedure associated with a second cell. The UE acquires a timing advance (TA) value based on the PDCCH order regarding the second cell by skipping an RA response (RAR) associated with the RA procedure. The UE transmits, based on the TA value, an uplink transmission to the second cell. For example, a PDCCH order may be a DCI message that triggers the UE to perform an RA procedure (contention free random access procedure (CFRA)). The RA procedure may include the UE transmitting RA preamble and waiting for the RAR from the base station that includes the TA.

According to general aspects of this disclosure, a method includes sending, by a first cell to a UE, a PDCCH order triggering a random access (RA) procedure associated with a second cell. The method includes receiving, at the second cell, an uplink transmissions from the UE, the uplink transmissions applying a timing advance (TA) value acquired based on the PDCCH order regarding the second cell by skipping an RA response (RAR) associated with the RA procedure.

The present disclosure provides techniques for determining whether/how to acquire and indicate TA value for a target cell prior to completion of LTM procedure. Similar techniques may also apply to inter-cell M-TRP 2TA operations, such as when one TRP is from the physical serving cell, and the other TRP is from a neighboring cell. The disclosed techniques consider the procedures for acquiring and indicating TA values for a neighboring cell. For example, the disclosure teaches at least TA value acquisition for a target cell prior to completion of a LTM procedure, TA value indication for a target cell prior to completion of a LTM procedure, and enhancing existing RA procedures.

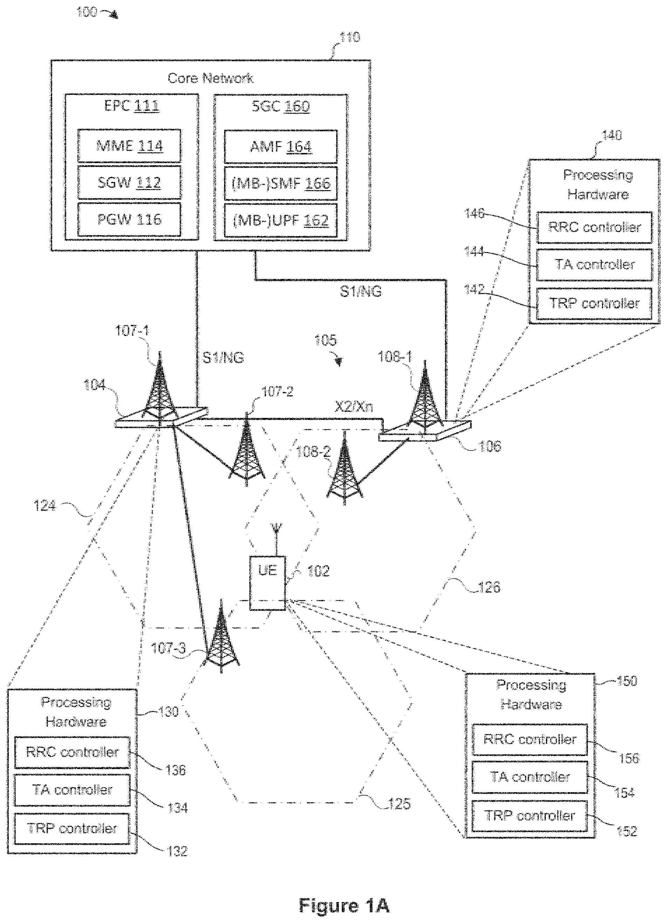

Referring first to Fig. 1A, an example of wireless communication system 100 includes a UE 102, a base station (BS) 104, a base station 106, and a core network (CN) 110. The base stations 104 and 106 may operate in an RAN 105 connected to the core network (CN) 110. The CN 110 may be implemented as an evolved packet core (EPC) 111 or a fifth generation (5G) core (5GC) 160, for example. The CN 110 may also be implemented as a sixth generation (6G) core in another example.

The base station 104 may cover one or more cells (e.g., cells 124 and 125) with one or more transmit and/or receive points (TRPs), and the base station 106 may similarly cover one or more cells (e.g., cell 126) with one or more TRPs. For example, the base station 104 operates cell 124 with TRPs 107-1 and 107-2 and operates cell 125 with TRP 107-3, and the base station 106 operates cell 126 with TRPs 108-1 and 108-2. The cells 124 and 125 are operated on the same carrier frequency/frequencies. The cell 126 may be operated on the same carrier frequency/frequencies as the cells 124 and 125. Alternatively, the cell 126 may be operated on different carrier frequency/frequencies from the cells 124 and 125. In some implementations, the base station 104 connects each of the TRPs 107-1, 107-2 and 107-3 via a fiber connection or an Ethernet connection. If the base station 104 is a gNB, the cells 124 and 125 are NR cells. If the base station 104 is an (ng-)eNB, the cells 124 and 125 are evolved universal terrestrial radio access (EUTRA) cells. Similarly, if the base station 106 is a gNB, the cell 126 is an NR cell, and if the base station 106 is an (ng-)eNB, the cell 126 is an EUTRA cell. The cells 124, 125, and 126 may be in the same Radio Access Network Notification Areas (RNA) or different RNAs. In general, the RAN 105 may include any number of base stations, and each of the base stations may cover one, two, three, or any other suitable number of cells. The UE 102 may support at least a 5G NR (or simply, "NR") or E-UTRA air interface to communicate with the base station 104 via the TRP 107-1, TRP 107-2 and/or TRP-3. Similarly, the UE 102 may support at least a 5G NR (or simply, "NR") or E-UTRA air interface to communicate with the base station 106 via the TRP 108-1 and/or TRP 108-2. Each of the base stations 104, 106 may connect to the CN 110 via an interface (e.g., S1 or NG interface). The base stations 104 and 106 also may be interconnected via an interface (e.g., X2 or Xn interface) for interconnecting NG RAN nodes.

When a base station (e.g., the base station 104 or 106) transmits DL data via a TRP (e.g., the TRP 107-1, TRP 107-2, TRP 107-3, TRP 108-1 or TRP 108-2), the base station 104 may generate a packet including the data transmit the packet to the TRP 107-1. For example, the packet may be a fronthaul transport protocol data unit. The TRP extracts the data from the packet and transmits the data. In some implementations, the base station 104 may include control information for time-critical control and management information directly related to the data in the packet, and the TRP may transmit the data in accordance with the control information. In some implementations, the data includes In-phase and Quadrature (IQ) data, a physical layer bit sequence, or a MAC PDU. When the TRP receives data from a UE (e.g., UE 102), the TRP generates a packet including the data and transmit the packet to the base station 104. In some implementations, the data includes IQ data, a physical layer bit sequence, or a MAC PDU.

Among other components, the EPC 111 may include a Serving Gateway (SGW) 112, a Mobility Management Entity (MME) 114, and a Packet Data Network Gateway (PGW) 116. The SGW 112 in general is configured to transfer user-plane packets related to audio calls, video calls, Internet traffic, etc., and the MME 114 is configured to manage authentication, registration, paging, and other related functions. The PGW 116 provides connectivity from the UE 102 to one or more external packet data networks, e.g., an Internet network and/or an Internet Protocol (IP) Multimedia Subsystem (IMS) network. The 5GC 160 includes a User Plane Function (UPF) 162 and an Access and Mobility Management Function (AMF) 164, and/or Session Management Function (SMF) 166. Generally, the UPF 162 is configured to transfer user-plane packets related to audio calls, video calls, Internet traffic, etc., the AMF 164 is configured to manage authentication, registration, paging, and other related functions, and the SMF 166 is configured to manage PDU sessions.

As illustrated in Fig. 1A, the base station 104 supports cells 124 and 125, and the base station 106 supports a cell 126. The cells 124, 125, and 126 may partially overlap, so that the UE 102 may select, reselect, or hand over from one of the cells 124, 125, and 126 to another. To directly exchange messages or information, the base station 104 and base station 106 may support an X2 or Xn interface. In general, the CN 110 may connect to any suitable number of base stations supporting NR cells and/or EUTRA cells.

The base station 104 is equipped with processing hardware 130 that may include one or more general-purpose processors (e.g., CPUs) and a non-transitory computer-readable memory storing instructions that the one or more general-purpose processors execute. Additionally or alternatively, the processing hardware 130 may include special-purpose processing units. The processing hardware 130 may include a PHY controller 132 configured to transmit data and control signal on physical DL channels and DL reference signals with one or more user devices (e.g., UE 102) via one or more TRPs (e.g., TRP 107-1, TRP 107-2 and/or TRP 107-3). The PHY controller 132 is also configured to receive data and control signal on physical UL channels and/or UL reference signals with the one or more user devices via the one or more TRPs (e.g., TRP 107-1, TRP 107-2 and/or TRP 107-3). The processing hardware 130 in an example implementation includes a MAC controller 134 configured to perform a random access (RA) procedure with one or more user devices, manage UL timing advance for the one or more user devices, receive UL MAC PDUs from the one or more user devices, and transmit DL MAC PDUs to the one or more user devices. The processing hardware 130 may further include an RRC controller 136 to implement procedures and messaging at the RRC sublayer of the protocol communication stack. The base station 106 may include processing hardware 140 that is similar to processing hardware 130. In particular, components 142, 144, and 146 may be similar to the components 132, 134, and 136, respectively.

The UE 102 is equipped with processing hardware 150 that may include one or more general-purpose processors such as CPUs and non-transitory computer-readable memory storing machine-readable instructions executable on the one or more general-purpose processors, and/or special-purpose processing units. The PHY controller 152 is also configured to receive data and control signal on physical DL channels and/or DL reference signals with the base station 104 or 106 via one or more TRPs (e.g., TRP 107-1, TRP 107-2, TRP 107-3, TRP 108-1 and/or TRP 108-2). The PHY controller 152 is also configured to transmit data and control signal on physical UL channels and/or UL reference signals with the base station 104 or 106 via the one or more TRPs (e.g., TRP 107-1, TRP 107-2, TRP 107-3, TRP 108-1 and/or TRP 108-2). The processing hardware 150 in an example implementation includes a MAC controller 154 configured to perform a random access procedure with base station 104 or 106, manage UL timing advance for the one or more user devices, transmit UL MAC PDUs to the base station 104 or 106, and receive DL MAC PDUs from the base station 104 or 106. The processing hardware 150 may further include an RRC controller 156 to implement procedures and messaging at the RRC sublayer of the protocol communication stack.

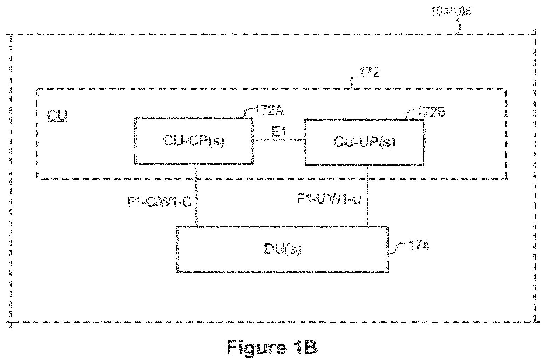

Fig. 1B depicts an example distributed or disaggregated implementation of one or both of the base stations 104, 106. In this implementation, each of the base station 104 and/or 106 includes a central unit (CU) 172 and one or more distributed units (DUs) 174. The CU 172 includes processing hardware, such as one or more general-purpose processors (e.g., CPUs) and a computer-readable memory storing machine-readable instructions executable on the general-purpose processor(s), and/or special-purpose processing units. For example, the CU 172 may include a PDCP controller (e.g., PDCP controller 134, 144), an RRC controller (e.g., RRC controller 136, 146), and/or an RRC inactive controller (e.g., RRC inactive controller 138, 148). In some implementations, the CU 172 may include an RLC controller configured to manage or control one or more RLC operations or procedures. In other implementations, the CU 172 does not include an RLC controller.

Each of the DUs 174 also includes processing hardware that may include one or more general-purpose processors (e.g., CPUs) and computer-readable memory storing machine-readable instructions executable on the one or more general-purpose processors, and/or special-purpose processing units. For example, the processing hardware may include a MAC controller (e.g., MAC controller 132, 142) configured to manage or control one or more MAC operations or procedures (e.g., a random access procedure), and/or an RLC controller configured to manage or control one or more RLC operations or procedures. The processing hardware may also include a physical layer controller configured to manage or control one or more physical layer operations or procedures.

In some implementations, the RAN 105 supports Integrated Access and Backhaul (IAB) functionality. In some implementations, the DU 174 operates as an (IAB)-node, and the CU 172 operates as an IAB-donor.

In some implementations, the CU 172 may include a logical node CU-CP 172A that hosts the control plane part of the PDCP protocol of the CU 172. The CU 172 may also include logical node(s) CU-UP 172B that hosts the user plane part of the PDCP protocol and/or SDAP protocol of the CU 172. The CU-CP 172A may transmit control information (e.g., RRC messages, F1 application protocol messages), and the CU-UP 172B may transmit data packets (e.g., SDAP PDUs or IP packets).

The CU-CP 172A may be connected to multiple CU-UPs 172B through the E1 interface. The CU-CP 172A selects the appropriate CU-UP 172B for the requested services for the UE 102. In some implementations, a single CU-UP 172B may be connected to multiple CU-CPs 172A through the E1 interface. If the CU-CP 172A and DU(s) 174 belong to a gNB, the CU-CP 172A may be connected to one or more DU 174s through an F1-C interface and/or an F1-U interface. If the CU-CP 172A and DU(s) 174 belong to an ng-eNB, the CU-CP 172A may be connected to DU(s) 174 through a W1-C interface and/or a W1-U interface. In some implementations, one DU 174 may be connected to multiple CU-UPs 172B under the control of the same CU-CP 172A. In such implementations, the connectivity between a CU-UP 172B and a DU 174 is established by the CU-CP 172A using Bearer Context Management functions.

For inter-cell mTRP, the concerned beam indication framework is Rel-15/16 TCI framework. The network entity may indicate and/or configure the UE a serving beam or Rel-15/16 TCI state, which is transmitted from the physical serving cell, and another one serving beam or Rel-15/16 TCI state, which is transmitted from the neighboring cell. The network entity may transmit DL data to the UE by these two beams (or Rel-15/16 TCI state). The UE may transmit UL data to the network entity via UL beam(s) indicated by a spatial relation or a source reference signal (RS). For NR Rel-18, 3GPP has agreed a working item (WI) for supporting 2TA operation in mTRP. This WI concerns Multiple-DCI (M-DCI) mode under the M-TRP, where M-DCI mode may imply a CORESET is configured or associated with an RRC parameter CORESETPoolIndex. When receiving configuration of 2TA operation, UE may need to maintain two TA values in at least one serving cell (or component carrier (CC)).

For NR Rel-18, 3GPP also has agreed another working item (WI) targeting mobility enhancement, one target of which is for a L1/L2 triggered mobility (LTM) procedure. The LTM procedure is intended for reducing latency when performing cell switching. In legacy, cell switching may require many higher layer message exchange and reconfiguration, which also induces longer latency. A LTM procedure may help resolve this latency issue. Before cell switching, the network entity may have configured one or more candidate cell configuration(s) to the UE. Afterwards, the network entity may transmit a cell switch command (CSC) to the UE, and the UE may realize which candidate cell configuration to apply and which cell to move toward (e.g., UE moves from source cell to target cell).

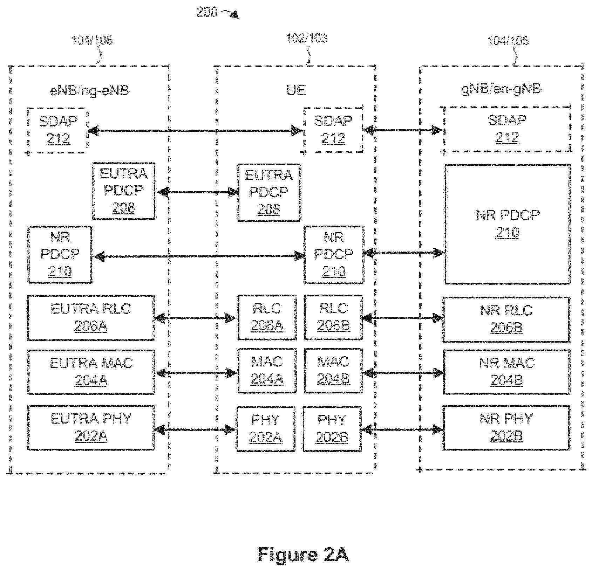

Fig. 2A illustrates, in a simplified manner, an example protocol stack 200 according to which the UE 102 may communicate with an eNB/ng-eNB or a gNB (e.g., one or both of the base stations 104, 106).

In the example stack 200, a physical layer (PHY) 202A of EUTRA provides transport channels to the EUTRA MAC sublayer 204A, which in turn provides logical channels to the EUTRA RLC sublayer 206A. The EUTRA RLC sublayer 206A in turn provides RLC channels to a EUTRA PDCP sublayer 208 and, in some cases, to an NR PDCP sublayer 210. Similarly, the NR PHY 202B provides transport channels to the NR MAC sublayer 204B, which in turn provides logical channels to the NR RLC sublayer 206B. The NR RLC sublayer 206B in turn provides data transfer services to the NR PDCP sublayer 210. The NR PDCP sublayer 210 in turn may provide data transfer services to the SDAP sublayer 212 or an RRC sublayer (not shown in Fig. 2A). The UE 102, in some implementations, supports both the EUTRA and the NR stack as shown in Fig. 2A, to support handover between EUTRA and NR base stations and/or to support dual connectivity (DC) over EUTRA and NR interfaces. Further, as illustrated in Fig. 2A, the UE 102 may support layering of NR PDCP 210 over EUTRA RLC 206A, and SDAP sublayer 212 over the NR PDCP sublayer 210.

The EUTRA PDCP sublayer 208 and the NR PDCP sublayer 210 receive packets (e.g., from an IP layer, layered directly or indirectly over the PDCP layer 208 or 210) that may be referred to as SDUs, and output packets (e.g., to the RLC layer 206A or 206B) that may be referred to as PDUs. Except where the difference between SDUs and PDUs is relevant, this disclosure for simplicity refers to both SDUs and PDUs as "packets."

On a control plane, the EUTRA PDCP sublayer 208 and the NR PDCP sublayer 210 may provide signaling radio bearers (SRBs) to the RRC sublayer (not shown in Fig. 2A) to exchange RRC messages or NAS messages, for example. On a user plane, the EUTRA PDCP sublayer 208 and the NR PDCP sublayer 210 may provide data radio bearers (DRBs) to support data exchange. Data exchanged on the NR PDCP sublayer 210 may be SDAP PDUs, IP packets, or Ethernet packets.

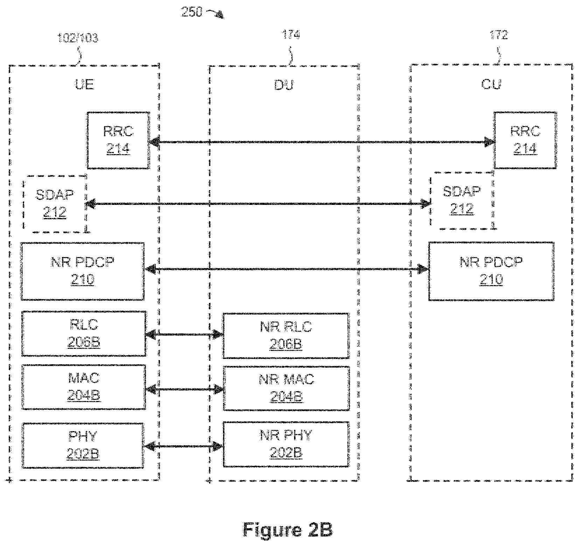

Thus, it is possible to functionally split the radio protocol stack, as shown by the radio protocol stack 250 in Fig. 2B. The CU at one or both of the base stations 104, 106 may hold all the control and upper layer functionalities (e.g., RRC 214, SDAP 212, NR PDCP 210), while the lower layer operations (e.g., NR RLC 206B, NR MAC 204B, and NR PHY 202B) are delegated to the DU. To support connection to a 5GC, NR PDCP 210 provides SRBs to RRC 214, and NR PDCP 210 provides DRBs to SDAP 212 and SRBs to RRC 214.

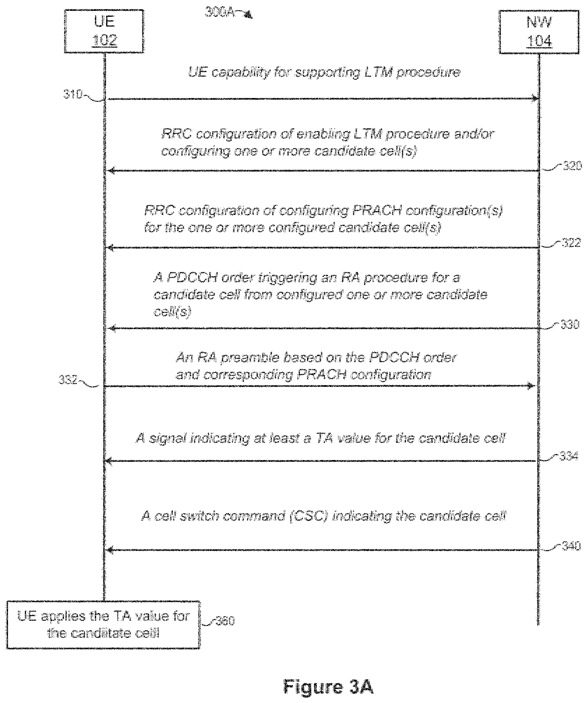

Fig. 3A illustrates an example signaling diagram 300A between a UE and a network entity (NW), in accordance with aspects of this disclosure. In the diagram 300A in Fig. 3A, the UE 102 may transmit 310 or report UE capability for supporting LTM procedures.

The NW 104 transmits 320 or configures RRC configuration(s) to enable function of LTM procedure and/or configure one or more candidate cell(s). The NW 104 may further transmit 322 or configure RRC PRACH configuration(s) for the one or more configured candidate cell(s). In some cases, the transmissions 320 and 322 may be performed using the same RRC message.

Then, the NW 104 may transmit 330 a PDCCH order triggering an RA procedure for a candidate cell from configured one or more candidate cell(s). In response, the UE 102 transmits 332 an RA preamble based on the PDCCH order and corresponding PRACH configuration.

Afterwards, the NW 104 may transmit 334 a signal indicating at least a TA value for the candidate cell. Then, the NW 104 may further transmit 340 a cell switch command (CSC) for indicating the candidate cell. The UE applies 360 the TA value for the candidate cell.

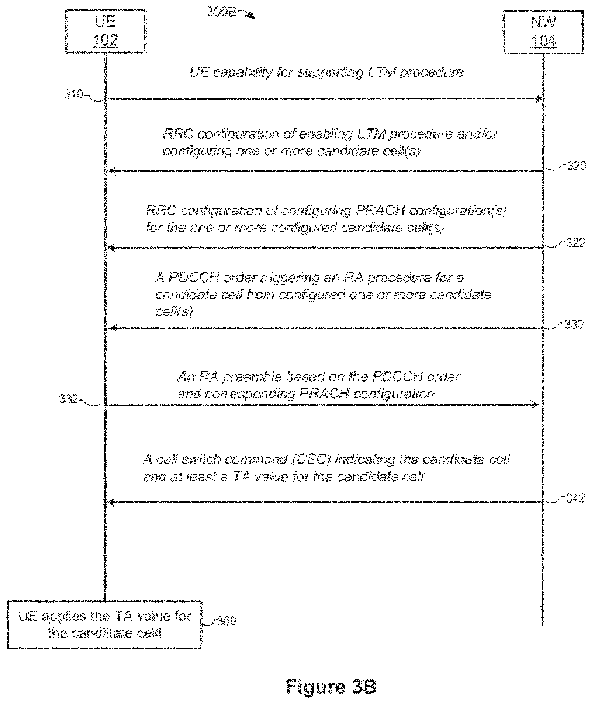

Fig. 3B illustrates an example signaling diagram 300B between the UE and the NW, in accordance with aspects of this disclosure. Similar to the signaling diagram 300A, the network entity 104 transmits 320 or configures RRC configuration(s) to enable function of LTM procedure and/or configure one or more candidate cell(s). The NW 104 further transmit 322 or configure RRC PRACH configuration(s) for the one or more configured candidate cell(s). The transmissions 320 and 322 may be performed using the same RRC message. The NW 104 transmits 330 a PDCCH order triggering an RA procedure for a candidate cell from configured one or more candidate cell(s). In response, the UE 102 transmits 332 an RA preamble based on the PDCCH order and corresponding PRACH configuration.

Unlike the signaling diagram 300A, in the signaling diagram 300B, the network entity 104 transmits 342 the CSC indicating the TA value and the candidate cell at the same time. The UE then applies 360 the TA value for the candidate cell.

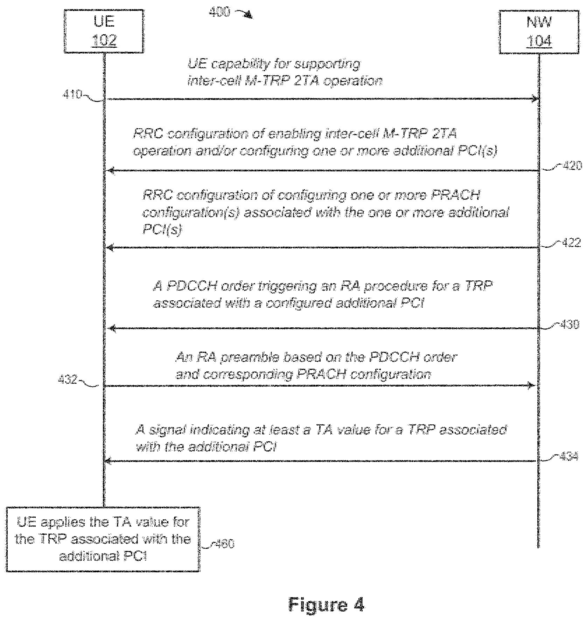

Fig. 4 illustrates an example signaling diagram 400 between the UE and the NW, in accordance with aspects of this disclosure. In the diagram 400, the UE 102 transmits 410 or report UE capability for supporting inter-cell M-TRP 2TA operation.

The NW 104 transmits 420 or configure RRC configuration(s) to enable function of inter-cell M-TRP 2TA operation and/or configure one or more additional PCI(s). The NW 104 may further transmit 422 or configure RRC PRACH configuration(s) associated with the one or more additional PCI(s).

In some cases, the transmissions 420 and 422 may use the same RRC message. Then, the NW 104 may transmit 430 a PDCCH order triggering an RA procedure for a TRP associated with a configured additional PCI(s).

In response, the UE 102 transmits 432 an RA preamble based on the PDCCH order and corresponding PRACH configuration. Afterwards, the NW 104 may transmit 434 a signal indicating at least a TA value for a TRP associated with the additional PCI(s). The UE applies 460 the TA value for the TRP associated with the additional PCI(s).

In the diagrams 300A, 300B and 400, the NW 104 may communicate with the UE 102 via TRP 107-1, 107-2 or 107-3. Referring to the diagrams 300A, 300B, and 400 collectively, the UE 102 and NW 104 may use various detailed examples or implementations below, which apply to general UEs and network entities (in addition to the UE 102 and the NW 104).

In some implementations, a TRP (e.g., TRP 107-1, TRP 107-2, TRP 107-3, TRP 108-1 and/or TRP 108-2) may be associated with or identified by a TRP identifier. In some implementations, a network entity (e.g., the base station 104 or 106) includes or configures a TRP identifier in uplink (UL) configuration(s) that the network entity transmits to a UE (e.g., the UE 102) for UL transmission(s) via a TRP identified by the TRP identifier.

In some implementations, the UL configuration(s) include downlink control information (DCI) transmitted on a PDCCH, and/or physical uplink shared channel (PUSCH) configuration, physical uplink control channel (PUCCH) configuration and/or sounding reference signal (SRS) configuration included in an RRC message (e.g., RRC reconfiguration message or an RRC resume message) that the network entity transmits to the UE.

In some implementations, the UL transmission(s) include PUSCH transmission(s), PUCCH transmission(s) and/or SRS transmission(s). In some implementations, the network entity includes a TRP identifier in DL configuration(s) that the network entity transmits to the UE 102 for DL transmission(s) via a TRP identified by the TRP identifier.

In some implementations, the DL configuration(s) include DCI transmitted on a PDCCH, and/or channel state information (CSI) resource configuration, physical downlink shared channel (PDSCH) configuration(s) and/or physical downlink control channel (PDCCH) configuration(s) included in an RRC message (e.g., RRC reconfiguration message or an RRC resume message) that the network entity transmits to the UE. In some implementations, the DL transmission(s) include CSI reference signal (CSI-RS) transmission(s), synchronization signal block (SSB) transmission(s), PDSCH transmission(s) and/or PDCCH transmission(s).

In other implementations, the network entity does not transmit/configure a TRP identifier to the UE and uses an implicit indication to indicate a TRP to the UE. In some implementations, the implicit indication may be one of the following configuration parameters: a *CORESETPoolIndex*, a value (candidate) of a *CORESETPoolIndex*, *dataScramblingIdentityPDSCH*, *dataScramblingIdentityPDSCH2-r16*, or *PUCCH-ResourceGroup-r16*. In such implementations, the UE derives a TRP (identifier) from the implicit indication. In some implementations, the network entity transmits an RRC message (e.g., RRC reconfiguration message or an RRC resume message) including the configuration parameters to the UE.

In some implementations regarding the first and the second TRP identifiers, the network entity configures or indicates the UE a first TRP identifier. In some implementations, the UE derives a first TRP identifier (value). In some implementations, the network entity configures or indicates the UE a second TRP identifier (value). In some implementations, the UE derives a second TRP identifier (value). In some implementations, the first TRP identifier may be associated with the first TRP. In some implementations, the second TRP identifier may be associated with the second TRP.

In some implementations, the network entity configures that a serving cell is associated with the first TRP or the first TRP identifier (value). In some implementations, the network entity configures a first control resource set (CORESET) associated with the serving cell or first TRP. The network entity may configure *CORESETPoolIndex* #0 to identify the first CORESET. In some implementations, the network entity may transmit to the UE an RRC message (e.g., an RRC setup message, an RRC reconfiguration message or an RRC resume message) configuring the first CORESET and/or including the *CORESETPoolIndex* #0. Thus, the UE monitors a PDCCH on the first CORESET to receive DCIs from the network entity, which implies that the UE monitors a PDCCH or receives DCIs via the first TRP from the network entity (e.g., from the first TRP). In such a case, the UE determines that *CORESETPoolIndex* #0 indicates a TRP (e.g., the first TRP) of the network entity.

In some implementations, the network entity configures that the serving cell is associated with the second TRP or the second TRP identifier (value). In other implementations, the second TAG is associated with a non-serving cell, and the network entity indicates or configures the association in the second RRC message.

In some implementations, the network entity configures the non-serving cell associated with the second TRP or the second TRP identifier (value). In some implementations, the network entity configures a second CORESET is associated with the serving cell, non-serving cell or second TRP. The network entity may configure *CORESETPoolIndex* #1 to identify the second CORESET. In some implementations, the network entity may transmit to the UE an RRC message (e.g., an RRC setup message, an RRC reconfiguration message or an RRC resume message) configuring the second CORESET and/or including the *CORESETPoolIndex* #1. Thus, the UE monitors a PDCCH on the second CORESET to receive DCIs from the network entity, which implies that the UE monitors a PDCCH or receives DCIs via the second TRP from the network entity (e.g., from the second TRP). In such a case, the UE determines that *CORESETPoolIndex* #1 indicates a TRP (e.g., the second TRP).

In some implementations regarding additional PCI for inter-cell mTRP and 2TA operations, the network entity may configure the UE with one or more additional PCI(s). The one or more additional PCI(s) may correspond to one or more neighboring cell(s) around the physical serving cell of the UE. An additional PCI may be a physical cell index or a logical index corresponding to a physical cell index of a neighboring cell. If a CORESET or a TCI state or an RRC configuration is associated with or includes an additional PCI, it may imply that the CORESET or TCI state or RRC configuration is associated with or transmitted from a neighboring cell corresponding to the additional PCI(s).

In some implementations regarding candidate cell configuration for LTM, the network entity may configure the UE one or more candidate cell configuration(s). The one or more candidate cell configuration(s) may include information of neighboring cell(s) of the UE. The one or more candidate cell configuration(s) may include information of candidate target cell of the UE for performing a LTM procedure. A candidate cell configuration may include or be one of an RRC*Reconfiguration* message, a *CellGroupConfig* IE or a *SpCellConfig* IE. A candidate cell configuration may include a candidate cell configuration ID. A candidate cell may be current configured/activated secondary cell (SCell) of the UE.

In some implementations, the candidate cell configuration may include one or more TCI state(s) or TCI state lists for a candidate cell.

In some implementations regarding PDCCH order triggered for TA for LTM or inter-cell M-TRP 2TA, the network entity may transmit a PDCCH order to the UE. The PDCCH order may trigger the UE to perform an RA procedure. The UE may perform the RA procedure for acquiring TA value and/or indicating TA value. In some implementations, the network entity may transmit the PDCCH order for TA value for a candidate cell or a target cell.

In some cases, the network entity may transmit the PDCCH order for TA value for a candidate cell or a target cell before transmitting a CSC indicating the candidate cell or the target cell. In some other implementations, the network entity may transmit the PDCCH order for TA value for a neighboring cell or a TRP in a neighboring cell. The UE may transmit a PRACH based on information indicated by the PDCCH order.

The PDCCH order may indicate at least one of the following for UE to transmit the PRACH: a random access preamble index, an UL/SUL indicator, which may indicate which UL carrier in the serving cell to transmit the PRACH; an SS/PBCH index, which may indicate the SS/PBCH that the UE may use to determine the RACH occasion for the PRACH transmission, a PRACH Mask index, which may indicate the RACH occasion associated with the SS/PBCH indicated by "SS/PBCH index" for the PRACH transmission.
n some implementations regarding CSC implementations, the network entity may transmit the UE a cell switch command. In one example, the network entity may transmit the cell switch command via MAC-CE or PDSCH. In some cases, the CSC is a MAC-CE. In some implementations, the UE may receive a first DCI from the network entity. The first DCI may schedule a PDSCH carrying the CSC.

In some implementations, the cell switch command may indicate a candidate cell or a target cell. In some implementations, the cell switch command may include a candidate cell configuration ID. It is noted that throughout this disclosure, a target cell may be or stand for a candidate cell indicated by a cell switch command. In response to receiving the cell switch command or after the action time of the cell switch command, the UE may perform LTM procedure based on the cell switch command. The UE may determine target cell and/or its corresponding configuration based on the candidate cell configuration ID indicated in the cell switch command.

Upon completing the LTM procedure, the target cell indicated by the cell switch command may become a new physical serving cell or a PCell. Upon completing the LTM procedure, the UE moves from the source cell to the target cell. It is noted that throughout this disclosure, the source cell may be or stand for the (original or previous) physical serving cell before receiving the CSC or completing LTM procedure.

In some implementations related to acquiring and/or indicate TA value at least for LTM procedure or M-TRP 2TA operations, after the UE transmits the PRACH, the network entity may indicate one or more TA value(s) to the UE. In some implementations, the network entity may indicate one TA value for the UE in a Random Access Response (RAR). In some implementations, the network entity may indicate one or more TA value(s) to the UE via a signal. In some implementations, the one or more TA value(s) may be absolute TA value(s).

In an example, the signal may be a CSC. In one example, the signal may be a MAC-CE. In one example, the signal may be a DCI. In one example, the signal may be a DCI scheduling a PDCH with a CSC. In one example, the signal may be an RRC message or RRC configuration. In some cases, the signal is not an RAR.

In some implementations regarding an absolute TA value, the network entity may transmit a first RRC configuration to configure or indicate whether a TA value is indicated by an RAR or the signal. In some cases, if the network entity configures that a TA value is indicated by an RAR after the UE transmits a PRACH for a candidate cell or a target cell, the UE may monitor or receive a TA value for the candidate cell or target cell (only) from the RAR accordingly. If the network entity configures that a TA value is indicated by an RAR after the UE transmits a PRACH for a neighboring cell, the UE may monitor or receive a TA value for the neighboring cell (only) from the RAR accordingly.

In some cases, if the network entity configures that a TA value is indicated by a signal after the UE transmits a PRACH for a candidate cell or a target cell, the UE may monitor or receive a TA value for the candidate cell or target cell from the signal accordingly. If the network entity configures that a TA value is indicated by a signal after the UE transmits a PRACH for a neighboring cell, the UE may monitor or receive a TA value for the neighboring cell (only) from the signal accordingly.

In some implementations, the first RRC configuration may be only applicable for the case where the UE monitors or receives a TA value after transmitting a PRACH triggered by a PDCCH order for a candidate cell, a target cell or a neighboring cell. The first RRC configuration may be not applicable for the case where the UE monitors or receives a TA value after transmitting a PRACH triggered by a PDCCH order for an RA procedure for the (physical) serving cell (e.g., acquiring TA, requesting UL resource).

In some implementations regarding TA value being configured by a second RRC configuration, the network entity may transmit a second RRC configuration to configure or enable a feature/function that a TA value may be indicated by an RAR and/or the signal. In more details, if the network entity configures that a TA value is indicated by an RAR and/or a signal, upon the UE transmits a PRACH for a candidate cell, a target cell or a neighboring cell, the UE may monitor or receive a TA value (only) from the RAR or the signal accordingly. The TA value may be indicated by the network entity in an RAR or a signal.

In some implementations, if the network entity decides to transmit TA value via an RAR, at most one TA value for the UE may be indicated in the RAR by the network entity. In some implementations, if the network entity decides to transmit TA value via a signal, at most two TA values for the UE may be indicated in the signal by the network entity.

In some implementations, if the network entity transmits the second RRC configuration to configure or enable such feature/function, after the UE transmits or the network entity receives a PRACH for a candidate cell, a target cell or a neighboring cell, at least one of the following may occur. First, the UE monitors or receives the TA value for the candidate cell, target cell or neighboring cell on both occasions of the RAR and occasions of the signal. Second, the network entity transmits or indicates the TA value for the candidate cell, target cell or neighboring cell in the RAR only, or in the signal only, or in both the RAR and the signal.

In some implementations regarding to RA procedures for two TRPs, if the network entity transmits the second RRC configuration to configure or enable such feature/function. If two RA procedures are triggered for the first TRP and the second TRP respectively, or if two RA procedures are triggered for a target cell or a candidate cell, after the UE transmits or the network entity receives PRACH(s) for a candidate cell (or target cell) or receives PRACH(s) for the first TRP and the second TRP, at least one of the following may occur:
*1.* the UE receives one TA value for the candidate cell or target cell in the RAR and receives the other one TA value for the candidate cell or target cell in the signal,
*2.* the UE receives two TA values for the candidate cell or target cell in the signal,
*3.* the UE receives a TA value for the first TRP in the RAR and receives a TA value for the second TRP in the signal,
*4.* the UE receives a TA value for the first TRP and a TA value for the second TRP in the signal,
*5.* the network entity transmits or indicates one TA value for the candidate cell or target cell in the RAR and the other one TA value for the candidate cell or target cell in the signal,
*6.* the network entity transmits or indicates two TA values for the candidate cell or target cell in the signal,
*7.* the network entity transmits or indicates a TA value for the first TRP in the RAR and a TA value for the second TRP in the signal,
*8.* the network entity transmits or indicates a TA value for the first TRP and a TA value for the second TRP in the signal.

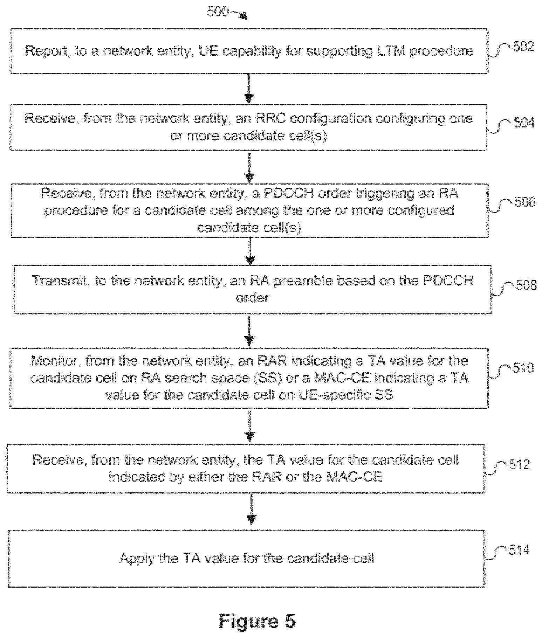

Fig. 5 illustrates an example flowchart 500 of a method performed by a UE, in accordance with aspects of this disclosure. As shown, the UE reports 502, to a network entity, UE capability for supporting LTM procedure. The UE receives 504, from the network entity, an RRC configuration configuring one or more candidate cell(s).

The UE receives 506, from the network entity, a PDCCH order triggering an RA procedure for a candidate cell among the one or more configured candidate cell(s). The UE transmits 508 to the network entity, an RA preamble based on the PDCCH order.

The UE monitors 510, from the network entity, an RAR indicating a TA value for the candidate cell on RA search space (SS) or a MAC-CE indicating a TA value for the candidate cell on UE-specific SS. The UE receives 512, from the network entity, the TA value for the candidate cell indicated by either the RAR or the MAC-CE. The UE then applies 514 the TA value for the candidate cell.

In some implementations, the network entity 104 may indicate a time delay to the UE 102. In some other implementations, the UE may derive a time delay. The time delay may be related to a TA value for a candidate cell or a candidate cell, and/or be applicable for determining action time of the TA value for a candidate cell or a candidate cell. The TA value for a candidate cell or a target cell may be effective after or upon the action time.

In some implementations, action time of a TA value for a candidate cell or a target cell (say ***T1***) may be a timing (e.g., a slot or symbol) after the time delay. The time delay may start or apply after one of the following.

After ***X1*** symbol(s) (or slot(s) or ms) after the UE receives the first or last symbol of PDCCH or PDSCH indicating/carrying the TA value for a candidate cell or a target cell. In some implementations, ***X1*** may be predefined, e.g., 0, or reported by the UE via UE capability report, or configured by the network entity via higher layer signaling, e.g., RRC signaling, or indicated by the network entity via a MAC-CE or DCI.

After ***X2*** symbol(s) (or slot(s) or ms) after the UE transmits the first or last symbol of the PUSCH or PUCCH with ACK for PDCCH or PDSCH indicating/carrying the TA value for a candidate cell or target cell. In some implementations, ***X2*** may be predefined, e.g., 0, or reported by the UE via UE capability report, or configured by the BS via higher layer signaling, e.g., RRC signaling, or indicated by the BS via a MAC-CE or DCI.

In some implementations, the time delay may be indicated by the network entity using a DCI or a MAC-CE or an RRC message. In one example, the time delay may be indicated by a CSC. In one example, the time delay may be indicated by a DCI scheduling a PDSCH with a CSC. In one example, the time delay may be included in serving cell configuration in the physical serving cell or included in candidate cell configuration(s).

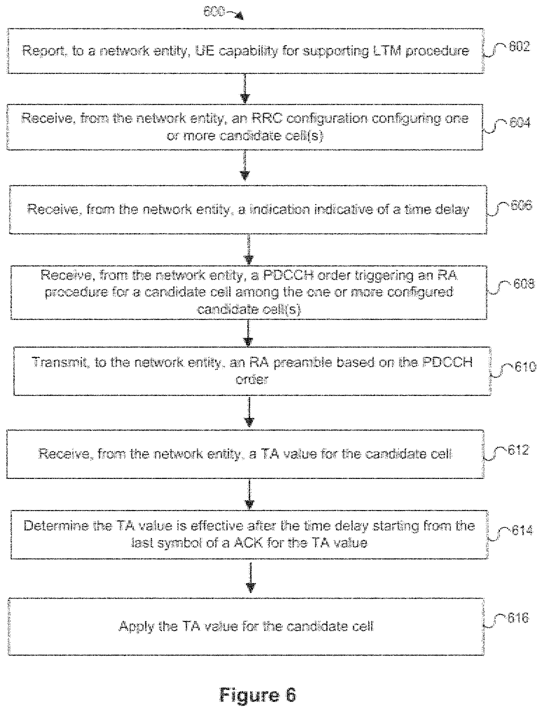

Fig. 6 illustrates an example flowchart 600 of a method performed by a UE, in accordance with aspects of this disclosure. As shown, the UE reports 602, to a network entity, UE capability for supporting LTM procedure. The UE receives 604, from the network entity, an RRC configuration configuring one or more candidate cell(s).

The UE receives 606, from the network entity, an indication indicative of a time delay. The UE receives 608, from the network entity, a PDCCH order triggering an RA procedure for a candidate cell among the one or more configured candidate cell(s).

The UE transmits 610, to the network entity, an RA preamble based on the PDCCH order. The UE receives 612, from the network entity, a TA value for the candidate cell (e.g., skipping RAR).

The UE determines 614 the TA value is effective after the time delay starting from the last symbol of a ACK for the TA value. The UE then applies 616 the TA value for the candidate cell.

In some implementations, the network entity may not indicate a time delay to the UE, or the UE may not derive a time delay. In some examples, the action time of a TA value for a candidate cell or target cell is equal to the action time of a CSC indicating the candidate cell or target cell. In some examples, the action time of a TA value for a candidate cell or target cell is equal to the timing of completing the LTM procedure triggered by the CSC indicating the candidate cell or target cell.

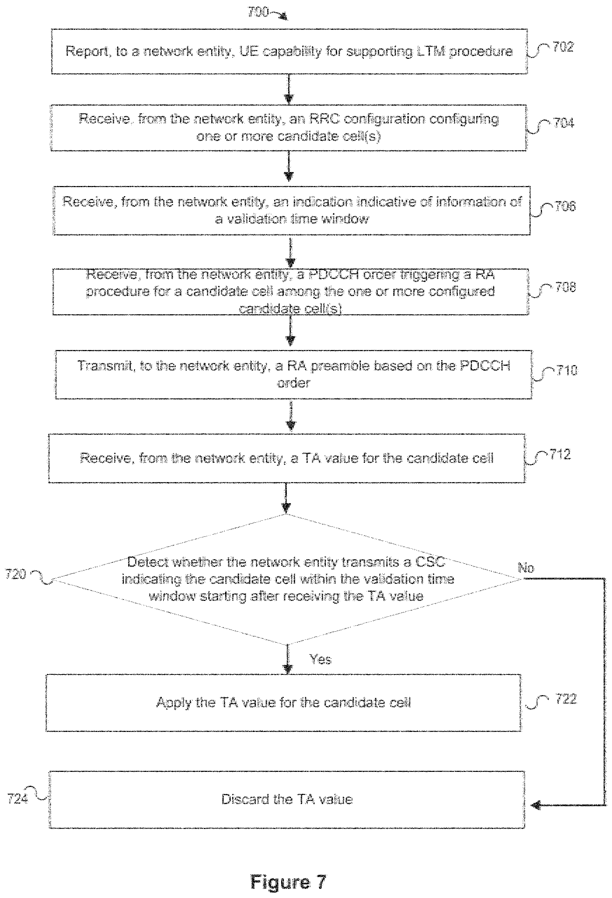

Fig. 7 illustrates an example flowchart 700 of a method performed by a UE, in accordance with aspects of this disclosure. As shown, the UE reports 702, to a network entity, UE capability for supporting LTM procedure. The UE receives 704, from the network entity, an RRC configuration configuring one or more candidate cell(s).

The UE receives 706, from the network entity, aan indication indicative of information of a validation time window. The UE receives 708, from the network entity, a PDCCH order triggering an RA procedure for a candidate cell among the one or more configured candidate cell(s).

The UE transmits 710, to the network entity, an RA preamble based on the PDCCH order. The UE receives 712, from the network entity, a TA value for the candidate cell (e.g., skipping RAR).

The UE determines or detects 720 whether the network entity transmits a CSC indicating the candidate cell within the validation time window starting after receiving the TA value. If so, the UE applies 722 the TA value for the candidate cell. Otherwise, the UE discards 724 the TA value.

In some implementations, the network entity may indicate or configure the UE a validation time window. If the UE receives a TA value for a candidate cell or target cell, and does not detect or receive a CSC indicating the candidate cell or target cell during the validation time window, the UE may release or discard the TA value.

In some implementations, if the UE receives a TA value for a candidate cell or target cell, and if the UE detects or receives a CSC indicating the candidate cell or target cell during the validation time window, the UE may apply the TA value.

In some other implementations, if the UE receives a CSC indicating a candidate cell or target cell, and if the UE receives, from the network entity, a control signaling enabling/indicating the UE to determine/derive a TA value for the candidate cell or target cell, the UE may apply the CSC. This may imply that the UE applies the CSC, regardless of whether a validation time window is configured/indicated or whether the UE detects/receives the CSC during the validation (if configured/indicated).

In some implementations regarding when to start the validation window, the timing to start the validation time window for a TA value applicable for a candidate cell or target cell may be based one of the following. After ***Y1*** symbol(s) (or slot(s) or ms) after the first/last symbol of PDCCH/PDSCH carrying a TA value applicable for a candidate cell or target cell, and/or a neighboring cell. In such case, ***Y1*** may be predefined, e.g., 0, or reported by the UE via UE capability report, or configured by the network entity via higher layer signaling, e.g., RRC signaling, or indicated by the network entity via a MAC-CE or DCI.

After ***Y2*** symbol(s) (or slot(s) or ms) after transmitting ACK of PDCCH/PDSCH carrying a TA value applicable for a candidate cell or target cell. In such case, ***Y2*** may be predefined, e.g., 0, or reported by the UE via UE capability report, or configured by the network entity via higher layer signaling, e.g., RRC signaling, or indicated by the network entity via a MAC-CE or DCI

In some implementations regarding an absence of a validation mechanism, if the UE receives a TA value applicable for a candidate cell or target cell, and does not detect or receive a CSC indicating the candidate cell or target cell, the UE may determine by itself whether to release or discard or keep the TA value applicable for a candidate cell or target cell.

In some implementations regarding the validation time window, the validation time window may be implemented as a time instant, a timer, a time duration, or a counter.

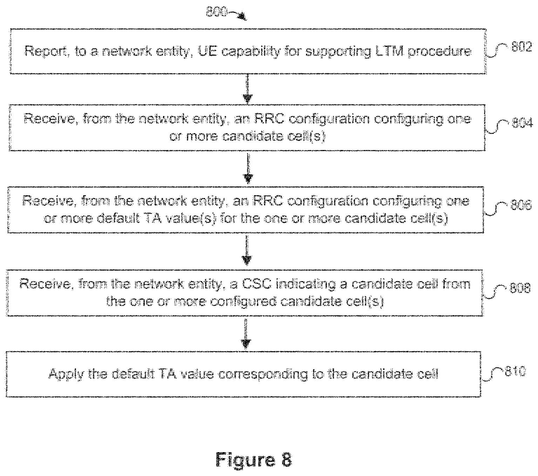

Fig. 8 illustrates an example flowchart 800 of a method performed by a UE, in accordance with aspects of this disclosure. As shown, the UE reports 802, to a network entity, UE capability for supporting LTM procedure. The UE receives 804, from the network entity, a RRC configuration configuring one or more candidate cell(s).

The UE receives 806, from the network entity, a RRC configuration configuring one or more default TA value(s) for the one or more candidate cell(s). The UE receives 808, from the network entity, a CSC indicating a candidate cell from the one or more configured candidate cell(s). The UE applies 810 a corresponding default TA value to the candidate cell.

In some implementations regarding when no TA value is indicated or no TA acquisition procedure is triggered before reception of a CSC or completion of LTM procedure, the UE may use a default TA value as illustrated in the flow chart 800. For example, the network entity does not transmit the PDCCH order for TA value for a candidate cell or a target cell before transmitting a CSC indicating the candidate cell or the target cell. In some implementations, the network entity does not transmit the PDCCH order for TA value for a candidate cell or a target cell before a LTM procedure triggered by a CSC indicating the candidate cell or the target cell is completed.

In some implementations, the network entity may configure or indicate whether the network entity would transmit the PDCCH order for TA value for a candidate cell or a target cell before transmitting a CSC indicating the candidate cell or the target cell or before a LTM procedure triggered by a CSC is completed.

In some implementations, the network entity does not indicate a TA value for a candidate cell or a target cell before transmitting a CSC indicating the candidate cell or the target cell. In some implementations, the network entity does not indicate a TA value for a candidate cell or a target cell before a LTM procedure triggered by a CSC indicating the candidate cell or the target cell is completed.

In some implementations, the network entity may configure or indicate whether the network entity would indicate a TA value for a candidate cell or a target cell before transmitting a CSC indicating the candidate cell or the target cell or before a LTM procedure triggered by a CSC is completed.

In some implementations, the UE applies a default or preconfigured TA value. If the network entity does not transmit the PDCCH order for TA value for a candidate cell or a target cell before transmitting a CSC indicating the candidate cell or the target cell or before a LTM procedure triggered by a CSC is completed. If the network entity does not indicate a TA value for a candidate cell or a target cell before transmitting a CSC indicating the candidate cell or the target cell or before a LTM procedure triggered by a CSC is completed, the UE may apply a TA value preconfigured by the network entity for the candidate cell or target cell indicated by the CSC. In some cases, the preconfigured TA value may be configured by the network entity in the candidate cell configuration for the candidate cell or target cell.

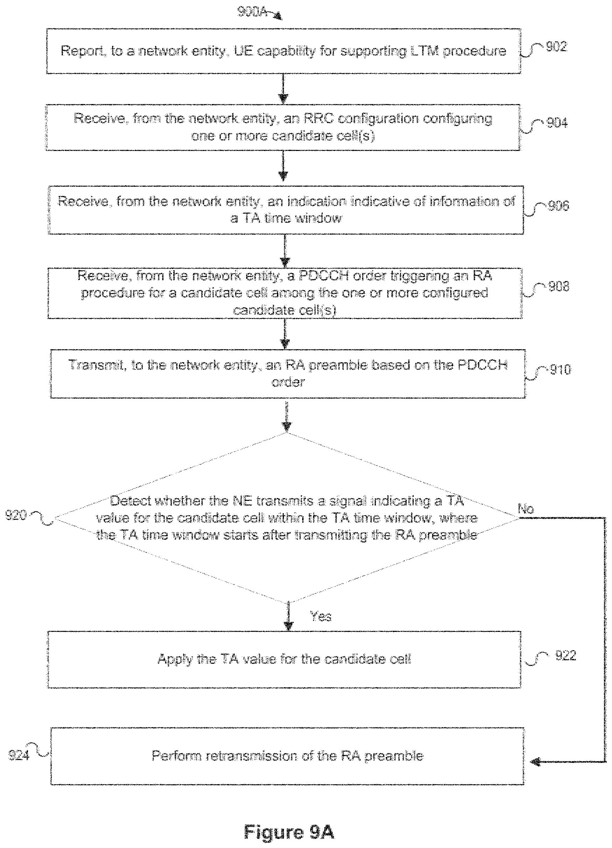

Fig. 9A illustrates an example flowchart 900A of a method performed by a UE, in accordance with aspects of this disclosure. The flowchart 900A may apply to LTM operations. As shown, the UE reports 902, to a network entity, UE capability for supporting LTM procedure. The UE receives 904, from the network entity, an RRC configuration configuring one or more candidate cell(s).

The UE receives 906, from the network entity, an indication indicative of a TA time window. The UE receives 908, from the network entity, a PDCCH order triggering an RA procedure for a candidate cell among the one or more configured candidate cell(s).

The UE transmits 910, to the network entity, an RA preamble based on the PDCCH order. The UE detects 920, whether the NE transmits a signal indicating a TA value for the candidate cell within the TA time window. The TA time window starts after transmitting the RA preamble. If the NE indicates the TA value, the UE applies 922 the TA value for the candidate cell. Otherwise, the UE performs 924 retransmission of the RA preamble.

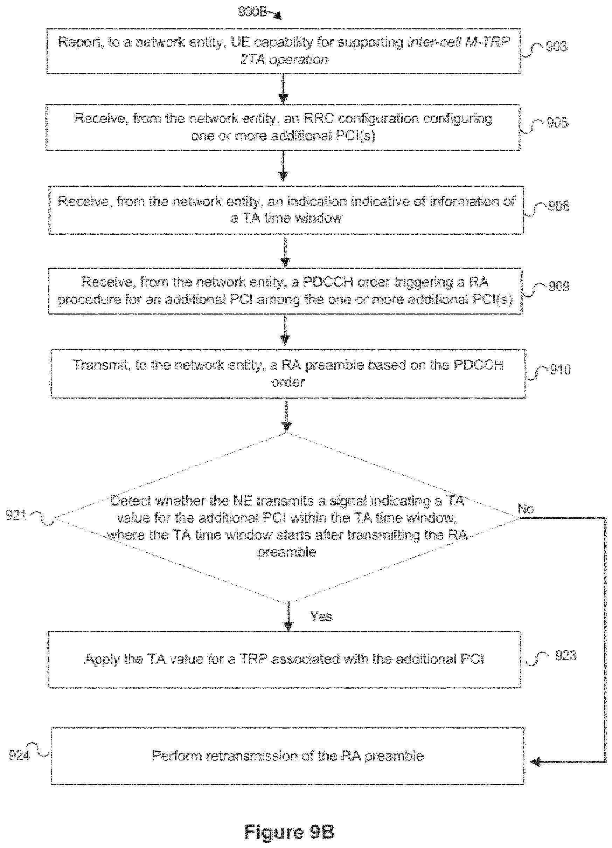

Fig. 9B illustrates an example flowchart 900B of a method performed by a UE, in accordance with aspects of this disclosure. The flowchart 900B may apply to inter-cell M-TRP 2TA operations. As shown, the UE reports 903, to a network entity, the UE capability for supporting *inter-cell M-TRP 2TA* operations. The UE then receives 905, from the network entity, an RRC configuration configuring one or more additional PCI(s).

The UE receives 906, from the network entity, a indication indicative of information of a TA time window. The UE receives 909, from the network entity, a PDCCH order triggering a RA procedure for an additional PCI among the one or more additional PCI(s).

The UE transmits 910, to the network entity, a RA preamble based on the PDCCH order. The UE detects 921, whether the NE transmits a signal indicating a TA value for the additional PCI within the TA time window. The TA time window starts after transmitting the RA preamble. When the NE indicates the TA value, the UE applies 923 the TA value for a TRP associated with the additional PCI(s). Otherwise, the UE performs 924 retransmission of the RA preamble.

In some implementations, if the network entity does not transmit the PDCCH order for TA value for a candidate cell or a target cell before transmitting a CSC indicating the candidate cell or the target cell or before a LTM procedure triggered by a CSC is completed. In some implementations, if the network entity does not indicate a TA value for a candidate cell or a target cell before transmitting a CSC indicating the candidate cell or the target cell or before a LTM procedure triggered by a CSC is completed, the UE may apply TA value(s), that the UE applied in the source cell, for the candidate cell or target cell indicated by the CSC.

When the network entity configures the UE to operate two TAGs or two TA values in a CC of the source cell (e.g., PCell), or if the UE maintains two TA values in a CC of the source cell (e.g., PCell), the UE may perform one of the following. If the network entity configures the UE to operate two TAGs or TA values in the candidate cell or target cell indicated by the CSC, the UE applies both TAGs in PCell of the source cell to the candidate cell or target cell.

If the network entity does not configure the UE to operate two TAGs or TA values in the candidate cell or target cell indicated by the CSC, the UE may apply the TA value associated with PTAG or the TAG with lowest TAG index in PCell of the source cell. If the network entity does not configure the UE to operate two TAGs or TA values in the candidate cell or target cell indicated by the CSC, the UE may apply the TA value associated with the TAG with a specific TAG index in PCell of the source cell, where the specific TAG index is indicated/configured by the network entity.

In some implementations, if the network entity does not transmit the PDCCH order for TA value for a candidate cell or a target cell before transmitting a CSC indicating the candidate cell or the target cell or before a LTM procedure triggered by a CSC is completed.

If the network entity does not indicate a TA value for a candidate cell or a target cell before transmitting a CSC indicating the candidate cell or the target cell or before a LTM procedure triggered by a CSC is completed, the UE may derive or determine a TA value (by itself) for the candidate cell or target cell indicated by the CSC.

In some implementations regarding an offset for TA value difference or downlink reference timing difference, if the network entity does not transmit the PDCCH order for TA value for a candidate cell or a target cell before transmitting a CSC indicating the candidate cell or the target cell or before a LTM procedure triggered by a CSC is completed.

If the network entity does not indicate a TA value for a candidate cell or a target cell before transmitting a CSC indicating the candidate cell or the target cell or before a LTM procedure triggered by a CSC is completed, the UE may derive or determine a TA value for the candidate cell or target cell indicated by the CSC, which is derived or determined based on an offset and/or TA value(s) that the UE applied in the source cell.

In some implementations, the network entity configures whether the UE may derive the TA value for the candidate cell or target cell (autonomously) or not by RRC configuration or CSC. In one example, the network entity configures whether the candidate cell (or target cell) and the source cell are synchronized or not by RRC configuration or CSC. In some other implementations, the network entity configures or indicates the timing offset between the source cell and candidate cell (or target cell) by RRC configuration or CSC.

In some implementations, the offset may be one of the following. The difference between TA values of source cell and the candidate cell (or target cell) indicated by the CSC. The difference between DL reference timings of source cell and the candidate cell (or target cell) indicated by the CSC. Or the difference for a slot or subframe or frame boundary between the source cell and the candidate cell (or target cell) indicated by the CSC.

When the network entity configures the UE to operate two TAGs or two TA values in a CC of the source cell (e.g., PCell) or the UE maintains two TA values in a CC of the source cell (e.g., PCell), and if the offset indicates/means the difference between TA values of source cell and the candidate cell (or target cell) indicated by the CSC, one of the following situation may occur. If the network entity configures the UE to operate two TAGs or maintain two TA values in the candidate cell or target cell indicated by the CSC, the network entity may indicate two offsets, and the UE may derive two TA values for the candidate cell or target cell, based on the two offsets and TA values in PCell of the source cell separately.

If the network entity does not configure the UE to operate two TAGs or maintain two TA values in the candidate cell or target cell indicated by the CSC, the UE may derive a TA value for the candidate cell or target cell, based on the offset and the TA value associated with PTAG or a TAG with lowest TAG index in PCell of the source cell.

If the network entity does not configure the UE to operate two TAGs or maintain two TA values in the candidate cell or target cell indicated by the CSC, the UE may derive a TA value for the candidate cell or target cell, based on the offset and TA value associated with a TAG with a specific TAG index in PCell of the source cell, where the specific TAG index is indicated/configured by the network entity.

In some implementations regarding the UE triggering a contention-based RA (CBRA), if the network entity does not transmit the PDCCH order for TA value for a candidate cell or a target cell before transmitting a CSC indicating the candidate cell or the target cell or before a LTM procedure triggered by a CSC is completed.

If the network entity does not indicate a TA value for a candidate cell or a target cell before transmitting a CSC indicating the candidate cell or the target cell or before a LTM procedure triggered by a CSC is completed, the UE may perform a CBRA procedure for the candidate cell or target cell. In some examples, the UE may perform the CBRA procedure before the CSC is received or action time of the CSC, or the LTM procedure triggered by the CSC is completed. In some other examples, the UE may perform the CBRA procedure after the CSC is received or action time of the CSC, or the LTM procedure triggered by the CSC is completed.

In some implementations regarding performing the retransmission without RAR, the UE may transmit a PRACH or RA preamble for a candidate cell or target cell based on information indicated by a PDCCH order (e.g., RA preamble index, RA occasion). In some implementations, the UE may transmit a PRACH or RA preamble for a TRP in a neighboring cell based on information indicated by a PDCCH order (e.g., RA preamble index, RA occasion). In some examples, the UE does not monitor an RAR after transmitting the PRACH or RA preamble.

In some implementations regarding a configured TA time window, the UE may monitor or receive the signal after transmitting the PRACH or RA preamble. The UE may monitor or receive the signal during a TA time window. The UE may monitor or receive the signal after transmitting the RAPCH or RA preamble and starting point of the TA time window. The network entity may indicate or configure length of the TA time window to the UE.

In some implementations, the UE and/or the network entity may determine the starting point of the TA time window based on one of the following:
1. The first symbol of the earliest CORESET that the UE is configured to monitor PDCCH on UE-specific search space (USS) or Type-3 common search space (CSS) after the UE transmits the PRACH or RA preamble, or
2. Slot *N*+4, where slot *N* is the slot where the UE transmits the PRACH or RA preamble, or
3. Slot *N*+*M*, where M is a value specified in standard or a value implemented in UE, or
4. In such case, *M* may be larger than 4
5. Slot *N*+*L*, where *L* is a value configured by the network entity. In some cases, *L* may be larger than 4.

In some implementations regarding retransmitting a PRACH if not receiving the signal during the TA time window, if the UE does receive or detect the signal indicating a TA value for the candidate cell or target cell before the end of the TA time window, the UE may perform one of the following:
1. Perform retransmission of the PRACH or RA preamble,
2. Increment a preamble ramping power counter by one,
3. Increment a preamble transmission counter by one.

In some implementations, the TA time window may be a time, or a timer, or a time duration, or a counter.

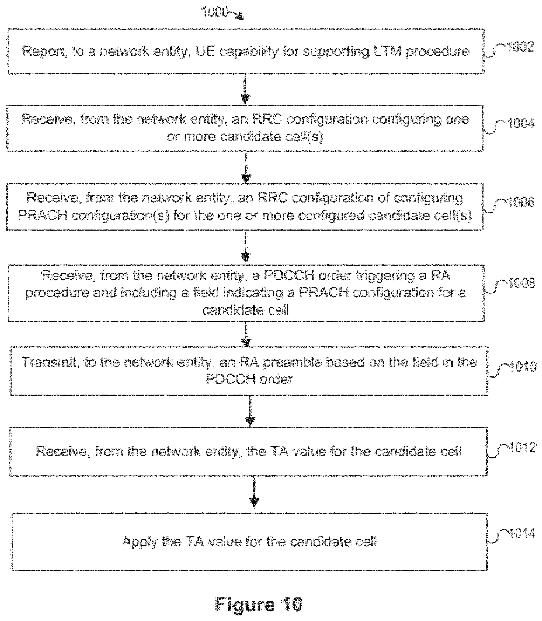

Fig. 10 illustrates an example flowchart 1000 of a method performed by a UE, in accordance with aspects of this disclosure. The UE reports 1002, to a network entity, UE capability for supporting LTM procedure. The UE receives 1004, from the network entity, an RRC configuration configuring one or more candidate cell(s).

The UE receives 1006, from the network entity, an RRC configuration of configuring PRACH configuration(s) for the one or more configured candidate cell(s). The UE receives 1008, from the network entity, a PDCCH order triggering a RA procedure and including a field indicating a PRACH configuration for a candidate cell.

The UE transmits 1010, to the network entity, an RA preamble based on the field in the PDCCH order. The UE receives 1012, from the network entity, the TA value for the candidate cell. The UE applies 1014 the TA value for the candidate cell.

In some implementations, the UE does not perform retransmission of the PRACH or RA preamble. In some implementations, the UE does not perform retransmission of the PRACH or RA preamble even not detecting or receiving the signal indicating a TA value for the candidate cell or target cell. In some implementations, the UE does not perform retransmission of the PRACH or RA preamble even not detecting or receiving the signal indicating a TA value for the candidate cell or target cell, regardless of whether the TA time window is configured/indicated or whether the UE receives the signal indicate TA value during the TA time window (if configured/indicated).

In some examples, the UE may discard or release information of transmitting the PRACH or RA preamble (e.g., RA preamble index, RA occasion) after transmitting the PRACH or RA preamble. In some examples, the UE may not use or apply a preamble ramping power counter or a preamble transmission counter when performing RA procedure triggered by the PDCCH order for the candidate cell or target cell or neighboring cell.

In some implementations regarding conditions for RA completion, based on one of the following, the UE considers or determines the RA procedure triggered by the PDCCH order for the candidate cell or target cell is successfully completed:
1) The UE receives the signal indicating a TA value for the candidate cell or target cell, or
2) A notification of a reception of the signal indicating a TA value for the candidate cell or target cell is received from lower layers (e.g., Layer 1 or PHY layer).

In some other implementations, based on one of the following, the UE considers or determines the RA procedure triggered by the PDCCH order for the candidate cell or target cell or neighboring cell is successfully completed:
1. After the UE transmits the PRACH or RA preamble, or
2. A notification of a successfully transmission of the PRACH or RA preamble is received from lower layers (e.g., Layer 1 or PHY layer).

In some implementations regarding RA power ramping, for one of the following, the network entity indicates or configures different values or RRC parameters for RA procedure intended for 2TA operation or LTM and RA procedure intended for other purposes (e.g., CBRA):
1. Preamble received target power,
2. Power ramping step,
3. Power ramping step high priority, or
4. Power ramping counter.

In some implementations, for one of the following, the UE applies different values or RRC parameters for an RA procedure intended for 2TA operation or LTM and an RA procedure intended for other purposes (e.g., CBRA):
1. Preamble received target power,
2. Power ramping step,
3. Power ramping step high priority, or
4. Power ramping counter.

In some implementations , the network entity may prevent from or be not allowed to configure the following two features/configurations to the UE in the active BWP of a CC in source cell, such as during two TA operations, where one of TA values corresponds to a TRP or a CORESET or TCI state associated with an additional PCI(s).

In some cases, the network entity may configure the following two features/configurations to the UE in the active BWP of a CC in source cell. Two TA operation, where one of TA values corresponds to a TRP or a CORESET or TCI state associated with an additional PCI, Candidate cell configuration(s), or LTM feature.

In some examples, the network entity may configure so if the UE indicates to support it via UE capability.

In some implementations, if the network entity configures the following two features/configurations to the UE in the active BWP of a CC in source cell: two TA operation, where one of TA values corresponds to a TRP or a CORESET or TCI state associated with an additional PCI, Candidate cell configuration(s) or LTM feature, then, the network entity may configure a first PRACH configuration and a second PRACH configuration to the UE.

In some cases, the first PRACH configuration may be a PRACH configuration applicable for a candidate cell or target cell indicated by a CSC. In some cases, the second PRACH configuration may be a PRACH configuration applicable for a neighboring cell or a TRP (or CORESET) associated with an additional PCI(s). The second PRACH configuration may include or be associated with an additional PCI(s).

In some implementations, the first PRACH configuration may include or be associated with an additional PCI(s). If the first PRACH configuration includes or is associated with an additional PCI same as that in the second PRACH configuration, one of the following may occur: the UE uses some or all of RA parameters in the second PRACH configuration, when the UE is indicated by the network entity to perform an RA procedure based on the first PRACH configuration, or the network entity does not configure an RA parameter, which is also configured in the second PRACH configuration, in the first PRACH configuration.

In some implementations, if the first PRACH configuration does not include or is not associated with an additional PCI same as that in the second PRACH configuration, or if the first PRACH configuration does not include or is not associated with an additional PCI, one of the following may occur: the network entity configures all RA parameter(s), which are necessary for performing an RA procedure, in the first PRACH configuration.

In some implementations regarding how UE may determine whether a PCCH order is for a source cell or a candidate cell, the network entity may configure to the UE one or more PRACH configuration(s) corresponding to or included in the one or more candidate cell configuration(s) respectively. In some implementations, the network entity may configure to the UE one or more PRACH configuration(s) corresponding to or associated with the one or more (configured) additional PCI(s) respectively.

In some implementations regarding explicit indication through PDCCH order, the PDCCH order may contain one field to indicate which PRACH configuration to refer or use when interpreting information for performing RA procedure indicated by the PDCCH order.

In some cases about LTM, each of the codepoints of the field may correspond to one of the following: a PRACH configuration of the active BWP of a CC of source cell (e.g., PCell or SCell), or a PRACH configuration corresponding to a candidate cell.

In some implementations, the network entity may transmit to the UE an activation signal for activating some of (configured) candidate cell(s). The activation signal may be a DCI, MAC-CE or RRC message.

In some implementations, the length of the field may be based on the amount of PRACH configuration of the active BWP of CC of source cell plus PRACH configurations corresponding to activated candidate cell(s). In some other implementations, the length of the field may be configurable by the network entity.

In some cases, each of the codepoints of the field may correspond to one of the following: a PRACH configuration of the active BWP of a CC of source cell (e.g., PCell or SCell), or a PRACH configuration corresponding to or associated with an additional PCI

In some implementations, the network entity may transmit to the UE an activation signal for activating some of (configured) additional PCI(s) or neighboring cell(s). The activation signal may be a DCI, MAC-CE or RRC message.

In some implementations, the length of the field may be based on the amount of PRACH configuration of the active BWP of CC of source cell plus PRACH configurations corresponding to activated additional PCI(s) or neighboring cell(s). In some other implementations, the length of the field may be configurable by the network entity.

In some implementations regarding implicit indication through PDCCH order, the PDCCH order does not indicate which PRACH configuration to refer or use when interpreting information for performing RA procedure indicated by the PDCCH order. In some cases, the network entity may indicate the UE in an implicit way that which PRACH configuration to refer or use when interpreting information for performing RA procedure indicated by the PDCCH order. In some cases, the UE determines which PRACH configuration to refer or use when interpreting information for performing RA procedure indicated by the PDCCH order, based on the CORESET pool index of the CORESET where the UE receives the PDCCH order.

In some implementations, when the UE receives a PDCCH order for a candidate cell or target cell, the UE may discard or ignore information indicated by an uplink (UL)/Supplementary Uplink (SUL) indicator field in the PDCCH order. In some cases, the UE may discard or ignore information indicated by a UL/SUL indicator field in the PDCCH order, even the network entity configures supplementary uplink carrier for the candidate cell or target cell. In some cases, the UE does not use information indicated by a UL/SUL indicator field in the PDCCH order for a candidate cell or target cell. In some other implementations, the UE may consider or determine that a UL/SUL indicator field in a PDCCH order for a candidate cell or target cell is used for a purpose, which is not for indicating which UL carrier in a candidate cell or target cell to transmit the PRACH or RA preamble indicated by the PDCCH order. This implies that if a PDCCH order triggers an RA procedure for a candidate cell or target cell, a UL/SUL indicator field in the PDCCH order is useless or reserved, or does not provide any meaning, or is repurposed for other usage (e.g., virtual PDCCH validation or indicating other information).

In some implementations, when the network entity transmits a PDCCH order for a candidate cell or target cell, the network entity may not indicate a valid information via a UL/SUL indicator field in the PDCCH order. In some cases, the network entity may not indicate a valid information by a UL/SUL indicator field in the PDCCH order or may not use a UL/SUL indicator field in the PDCCH order, even the network entity configures supplementary uplink carrier for the candidate cell or target cell. In some implementations, the network entity may reserve the UL/SUL indicator field in the PDCCH order. In some other implementations, the network entity may use a UL/SUL indicator field in a PDCCH order for a candidate cell or target cell to achieve a purpose, which is not for indicating which UL carrier in a candidate cell or target cell for the UE to transmit the PRACH or RA preamble indicated by the PDCCH order. This implies that if the network entity triggers an RA procedure for a candidate cell or target cell via a PDCCH order, a UL/SUL indicator field in the PDCCH order is useless or does not provide any meaning or is repurposed for other usage (e.g., virtual PDCCH validation or indicating other information).

In some implementations regarding indicating the purpose of UL/SUL field in the PDCCH order, the network entity may configure or indicate to the UE that whether a UL/SUL indicator field in a PDCCH order is used for indicating which UL carrier in a candidate cell or target cell to transmit the PRACH or RA preamble indicated by the PDCCH order, when the UE receives the PDCCH order for the candidate cell or target cell.

In some implementations, the network entity may configure or indicate to the UE that whether a UL/SUL indicator field in a PDCCH order is used for other purpose, different from indicating which UL carrier in a candidate cell or target cell to transmit the PRACH or RA preamble indicated by the PDCCH order, when the UE receives the PDCCH order for the candidate cell or target cell.

In some implementations, the network entity may configure or indicate to the UE that whether a UL/SUL indicator field in a PDCCH order may be ignored, discarded or reserved, when the UE receives the PDCCH order for the candidate cell or target cell.

In some implementations regarding that UL/SUL indicator field is still needed for PDCCH order for LTM, how the UE interprets a UL/SUL indicator field in the PDCCH order may be dependent on whether the PDCCH order is for a candidate cell (or target cell) or for a physical serving cell (or source cell).

In some implementations, if the UE receives a PDCCH order for **a candidate cell or target cell**, when the UE interprets information indicated by a UL/SUL indicator field in the PDCCH order, the UE may perform one of the following:
- If the UL/SUL indicator field indicates "0" or "non-supplementary uplink", the UE may transmit a PRACH or RA preamble in a normal uplink carrier or non-supplementary uplink carrier in the candidate cell or target cell;
- If the UL/SUL indicator field indicates "1" or "supplementary uplink", the UE may transmit a PRACH or RA preamble in a supplementary uplink carrier in the candidate cell or target cell.
In some cases, if the network entity does not configure supplementary uplink carrier for the candidate cell or target cell, the UE may ignore UL/SUL indicator field in the PDCCH order.

In some other implementations, if the UE receives a PDCCH order for **a candidate cell or target cell**, when the UE interprets information indicated by a UL/SUL indicator field in the PDCCH order, the UE may perform one of the following:
- If UL/SUL indicator field indicates "0" or "non-supplementary uplink", the UE may transmit a PRACH or RA preamble in a normal uplink carrier or non-supplementary uplink carrier in the candidate cell or target cell;
- If UL/SUL indicator field indicates "1" or "supplementary uplink", the UE may transmit a PRACH or RA preamble in a supplementary uplink carrier in **the source cell or physical serving cell**.
   ∘ In such cases, it may imply that the network entity does not configure supplementary uplink carrier for the candidate cell or target cell, or the network entity configures/indicates that the candidate cell (or target cell) shares/uses the same supplementary uplink carrier as the source cell or physical serving cell.

In some implementations, if the UE receives a PDCCH order for a source cell or physical serving cell, when the UE interprets information indicated by a UL/SUL indicator field in the PDCCH order, the UE may perform one of the following:
- If UL/SUL indicator field indicates "0" or "non-supplementary uplink", the UE may transmit a PRACH or RA preamble in a normal uplink carrier or non-supplementary uplink carrier in the source cell or physical serving cell;
- If UL/SUL indicator field indicates "1" or "supplementary uplink", the UE may transmit a PRACH or RA preamble in a supplementary uplink carrier in the source cell or physical serving cell.

### Additional description

It is noted that throughout this disclosure, the UE may have one or more of the following attributes or behaviors. The following attributes or behaviors of the UE may also imply associated attributes or behaviors of a network entity.
- The UE may be configured with and/or served by the network entity in a serving cell.
- The UE may (be configured to) communicate with the network entity in the serving cell.
- The UE may be configured with one or more serving cells by the network entity, which may include the serving cell.
- The UE may be activated or be indicated, by the network entity, to activate one or more serving cells, which may include the serving cell.
- The UE may be configured and/or indicated, by the network entity, one or more BWP. The UE may be indicated and/or configured, by the network entity, a BWP (in the serving cell).
   ∘ In some cases, the BWP may be activated as an active BWP.
   ∘ In some cases, the BWP may be referred to an active BWP
   ∘ In some cases, the BWP may be an active DL BWP.
   ∘ In some cases, the BWP may be an active UL BWP.
   ∘ In some cases, the BWP may be an initial BWP.
   ∘ In some cases, the BWP may be a default BWP.
   ∘ In some cases, the BWP may be a dormant BWP.
- The UE may be in one of RRC_CONNECTED state, RRC_INACTIVE state or RRC_IDLE state.

It is noted that throughout this disclosure, a neighboring cell may be referred to or replaced with one or some of the following:
- Non-serving cell,
- A cell with PCI different that of the serving cell,
- A TRP associated with a PCI different from that of the serving cell.

It is noted that throughout this disclosure, action time of a signal may mean the actual timing when the signal is applicable or takes effect, which may be later than the timing of receiving this signal.

It is noted that throughout this disclosure, for case(s) that a network entity configures or indicates the UE to operate with **S-TRP** mode in a serving cell or a BWP, or for case(s) that a serving cell or a BWP is operated with **S-TRP** mode, it may imply or be referred to be one of the following:
- No TRP identifier or no TRP-related index is configured or indicated, by the network entity, to any channel or RS in the serving cell or BWP, and/or
- (only) One TRP identifier or TRP-related index is configured or indicated, by the network entity, to any channel or RS in the serving cell or BWP, and/or
- When the UE or the network entity transmits/receives a transmission, (only) one TRP identifier or TRP-related index is configured or indicated or involved to the transmission or the beam/TCI state applied for the transmission.

It is noted that throughout this disclosure, for case(s) that a network entity configures or indicates the UE to operate with **M-TRP** mode in a serving cell or a BWP, or for case(s) that a serving cell or a BWP is operated with **M-TRP** mod, it may imply or be referred to be one of the following:
- More than one TRP identifier or TRP-related index is configured or indicated, by the network entity, to at least one channel or RS in the serving cell or BWP, and/or
- One TRP identifier or TRP-related index is configured or indicated, by the network entity, to one channel or RS in the serving cell or BWP; and the UE derives or determines another one TRP identifier or TRP-related index applied for or associated with at least one channel or RS in the serving cell or BWP, and/or
- When the UE or the network entity transmits/receives a transmission, more than one TRP identifier or TRP-related index is configured or indicated or involved to the transmission or the beam/TCI state applied for the transmission.

It is noted that throughout this disclosure, a panel may mean that an antenna (port) group or an antenna (port) set. There may be more than one DL/UL beams associated with one panel. When one transmitting node (UE or NW) is performing a transmission via a panel, only one beam associated with the panel may be used to perform the transmission. For a transmitter comprising more than one panels, e.g., two panels, it may happen that two beams associated with the two panels respectively are used to perform a transmission.

It is noted that throughout this disclosure, a TRP identifier may mean or be referred to a (candidate) value of a TRP identifier. The first TRP identifier may be a first candidate value of a TRP identifier or a first TRP identifier value. The second TRP identifier may be a second candidate value of a TRP identifier or a second TRP identifier value.

It is noted that throughout this disclosure, a panel identifier may mean or be referred to a (candidate) value of a panel identifier. The first panel identifier may be a first candidate value of a panel identifier or a first panel identifier value. The second panel identifier may be a second candidate value of a panel identifier or a second panel identifier value.

It is noted that throughout this disclosure, when a procedure or description is related to a serving cell, it may mean the procedure or description is related to an active (DL/UL) BWP in the serving cell.

It is noted that throughout this disclosure, an expression of "X/Y" may include meaning of "X or Y". It is noted that throughout this disclosure, an expression of "X/Y" may include meaning of "X and Y". It is noted that throughout this disclosure, an expression of "X/Y" may include meaning of "X and/or Y". It is noted that throughout this disclosure, an expression of "(A) B" or "B (A)" may include concept of "only B". It is noted that throughout this disclosure, an expression of "(A) B" or "B (A)" may include concept of "A+B" or "B+A".

It is noted that some or all of the foregoing or the following embodiments may be jointly combined or formed to be a new or another one embodiment.

It is noted that the foregoing or the following embodiments may be used to solve at least (but not limited to) the issue(s) or the diagram(s) mentioned in this disclosure.

The following additional considerations may apply to the foregoing and the following discussions.

It is noted that any two or more than two of the foregoing or the following paragraphs, (sub)-bullets, points, actions, or claims described in each method/embodiment/implementation may be combined logically, reasonably, and properly to form a specific method.

It is noted that any sentence, paragraph, (sub)-bullet, point, action, or claim described in each of the foregoing or the following embodiment(s)/implementation(s)/concept(s) may be implemented independently and separately to form a specific method. Dependency, e.g., "based on", "more specifically", "where" or etc., in embodiment(s)/implementation(s)/concept(s) mentioned in this disclosure is just one possible embodiment which would not restrict the specific method.

It is noted that, some or all of the following terminology and assumption may be used hereafter.
- BS: a network central unit or a network node in NR which is used to control one or multiple TRPs which are associated with one or multiple cells. Communication between BS and TRP(s) is via fronthaul. BS may be referred to as central unit (CU), eNB, gNB, or NodeB.
- TRP: a transmission and reception point provides network coverage and directly communicates with UEs. TRP may be referred to as distributed unit (DU) or network node.
- Cell: a cell is composed of one or multiple associated TRPs, e.g. coverage of the cell is composed of coverage of all associated TRP(s). One cell is controlled by one BS or a network entity. Cell may be referred to as TRP group (TRPG).
- Serving beam: serving beam for a UE is a beam generated by a network node, e.g., TRP, which is configured to be used to communicate with the UE, e.g., for transmission and/or reception.
- Candidate beam: candidate beam for a UE is a candidate of a serving beam. Serving beam may or may not be candidate beam.

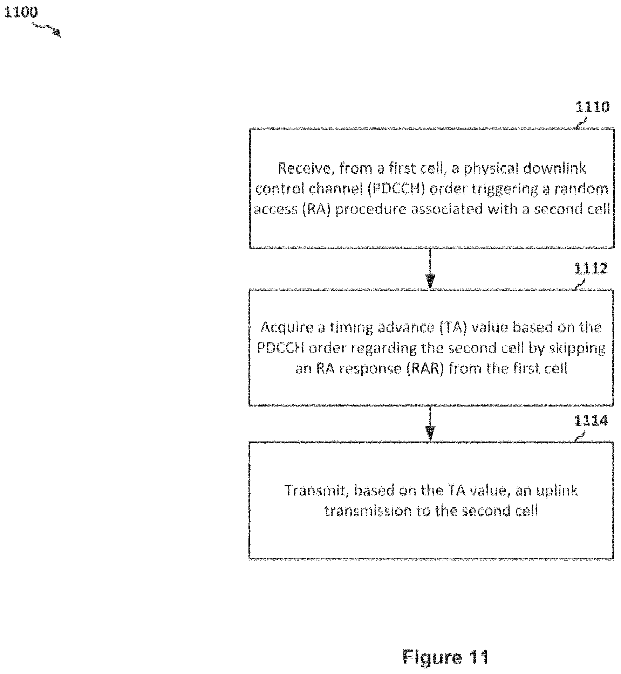

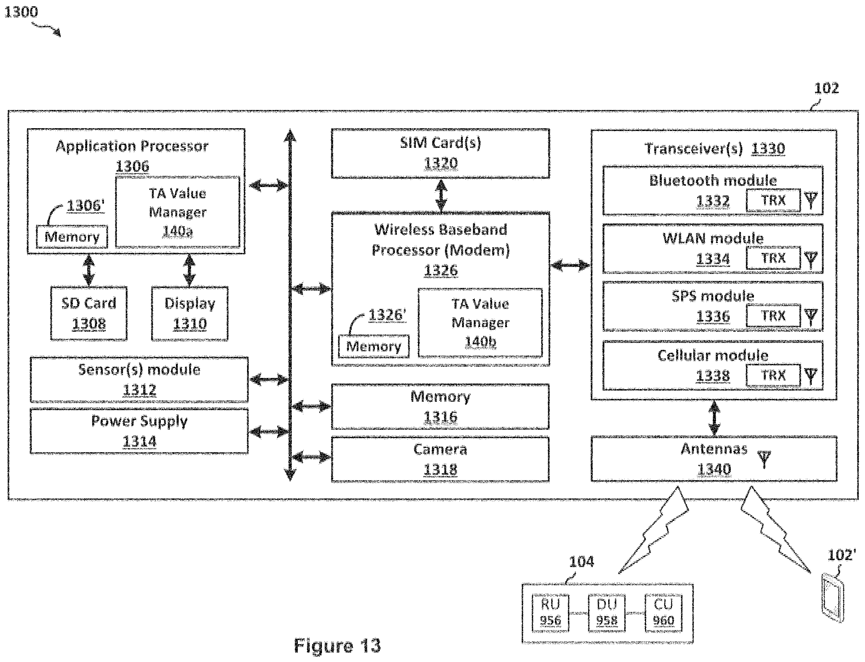

FIG. 11 is a flowchart 1100 of a method of wireless communication at a UE. With reference to FIGS. 1 and 13, the method may be performed by the UE 102 (e.g., a leader UE), the UE apparatus 1302, etc., which may include the memory 1313', 1306', 1313, and which may correspond to the entire UE 102 or the entire UE apparatus 1302, or a component of the UE 102 or the UE apparatus 1302, such as the wireless baseband processor 1313 and/or the application processor 1306.

In FIG. 11, the UE receives 1110, from a first cell, a physical downlink control channel (PDCCH) order triggering a random access (RA) procedure associated with a second cell. The UE acquires 1112 (using techniques of the examples above), a timing advance (TA) value based on the PDCCH order regarding the second cell by skipping an RA response (RAR) associated with the RA procedure. The UE transmits 1114, based on the TA value, an uplink transmission to the second cell.

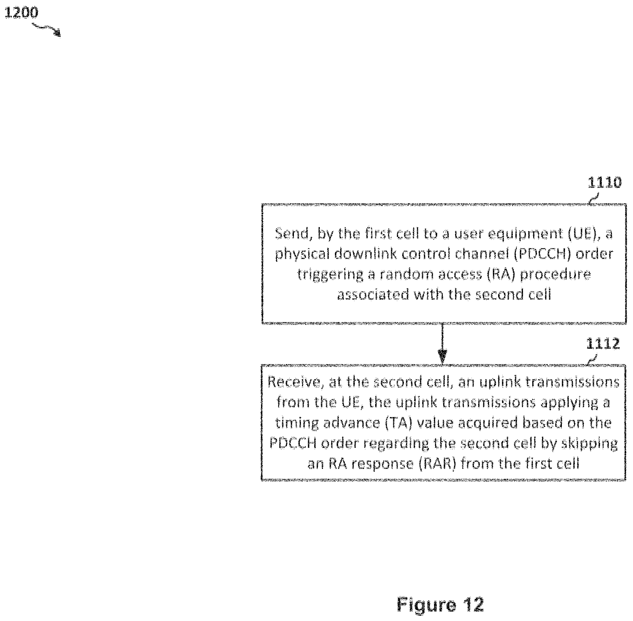

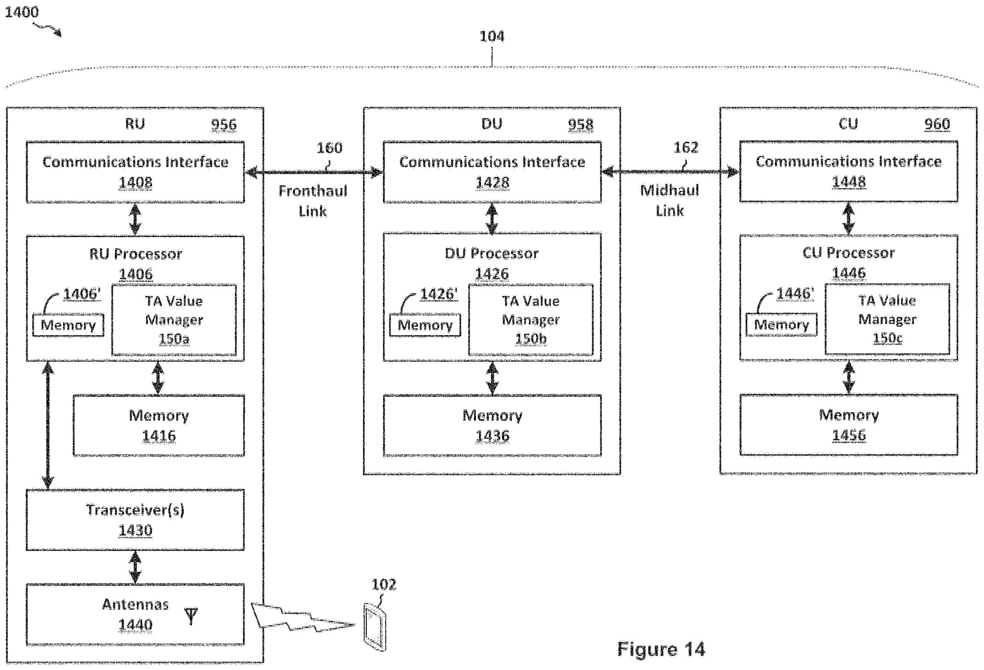

FIG. 12 is a flowchart 1200 of a method of wireless communication at a network entity. With reference to FIGS. 1 and 14, the method may be performed by one or more network entities 104, which may correspond to a base station or a unit of the base station, such as the RU 106, the DU 108, the CU 110, an RU processor 1406, a DU processor 1413, a CU processor 1446, etc. The one or more network entities 104 may include memory 1406'/1413'/1446', which may correspond to an entirety of the one or more network entities 104, or a component of the one or more network entities 104, such as the RU processor 1406, the DU processor 1413, or the CU processor 1446.

In FIG. 12, the network entity sends 1110, by the first cell to a user equipment (UE), a physical downlink control channel (PDCCH) order triggering a random access (RA) procedure associated with the second cell. The network entity receives 1112, at the second cell, an uplink transmissions from the UE, the uplink transmissions applying a timing advance (TA) value acquired based on the PDCCH order regarding the second cell by skipping an RA response (RAR) associated with the RA procedure. Detail examples for the methods of FIGS. 11 and 12 are discussed below.

In aspects, the UE acquires the TA value by receiving a cell switch command (CSC) from the first cell during a lower layer triggered mobility (LTM) operation, wherein the CSC provides the TA value. In some cases, the CSC further provides an additional TA value when the second cell supports multi-TRP (mTRP) two-timing-advance (2TA) operations, wherein the UE maintains two respective TA values with the first TRP and the second TRP. In some cases, the first cell comprises a source cell and the second cell comprises a target cell or a candidate cell for the LTM operation.

In aspects, the UE acquires the TA value by receiving, from the first cell, a media access control (MAC) control element (CE) for performing multi-TRP (mTRP) two-timing-advance (2TA) operations, wherein the MAC-CE indicates at least the TA value for the mTRP 2TA operations, wherein the first cell comprises a serving cell and the second cell including a neighboring cell.

In aspects, the UE receives the RAR or a media access control (MAC) control element (CE) from the second cell, the RAR or the MAC CE carrying an absolute value. The UE uses the absolute value as the TA value for the second cell when the TA value is not acquired otherwise.

In aspects, the UE further transmits an RA preamble at power ramping levels associated with the second cell. In some cases, the power ramping levels are based on at least one of: a received target power at the second cell; a power ramping step; a priority of the power ramping step; or a power ramping counter.

In some cases, the UE transmits, to the first cell, a message indicating a capability of being configured for LTM and mTRP 2TA operations. In some cases, the UE receives a physical random access channel (PRACH) in a radio resource control (RRC) message for neighboring cells corresponding to additional one or more physical cell identifiers (PCIs).

In some cases, the UE further receives a physical random access channel (PRACH) in a radio resource control (RRC) message for candidate cells including the second cell.

In aspects, the PDCCH provides an explicit or implicit indication that the PDCCH is applicable in the first cell or the second cell. In some cases, the explicit indication of the PDCCH comprises a field indicating a subset of available cells of the network entity.

In aspects, the PDCCH triggers the RA procedure without including an uplink indicator field or a supplemental uplink indicator field. The PDCCH includes an uplink indicator field or a supplemental uplink indicator field, and the method further includes ignoring information in the uplink indicator field or the supplemental uplink indicator field based on a configuration by the network entity.

In aspects, the PDCCH includes an uplink indicator field or a supplemental uplink indicator field. The UE interprets the uplink indicator field or the supplemental uplink indicator field based on whether the PDCCH is for the first cell or the second cell. Upon determining that the PDCCH is for the first cell, the UE interprets uplink configuration for the first cell based on information in the uplink indicator field and the supplemental uplink indicator field. Upon determining that the PDCCH is for the second cell, interpreting uplink configuration for the second cell based on information in the uplink indicator field and the supplemental uplink indicator field. Upon determining that the PDCCH is for the second cell, interpreting uplink configuration for the second cell based on information in the uplink indicator field and interpreting uplink configuration for the first cell based on information in the supplemental uplink indicator field.

In aspects, the UE completes the RA procedure without receiving the RAR. The completing the RA procedure may be indicated by receiving a physical downlink shared channel (PDSCH) that schedules a cell switch command (CSC) or a media access control (MAC) control element (CE) that includes the TA value; or transmitting an RA preamble.

In aspects, the UE receives an action time for the transmitting of the uplink transmission based on the TA value, wherein the action time is carried by a downlink control information (DCI) or media access control (MAC) control element (CE). In some cases, transmitting the uplink transmission is immediately subsequent to completing the RA procedure.

In aspects, the UE discards the TA value when the UE does not receive a cell switch command (CSC) regarding the second cell of the network entity. In some cases, the UE receives a validation window from the first cell. Discarding the TA value may include not receiving the CSC within the validation window. In some cases, the UE starts the validation window after: a last symbol of a downlink transmission that indicates the TA value; or transmitting a feedback to the downlink transmission that indicates the TA value.

In aspects, the UE determines whether to keep or discard the TA value regardless of receiving a cell switch command (CSC) regarding the second cell of the network entity. The UE may acquire the TA value by performing at least one of: applying a default TA value preconfigured in the UE; reusing a previous TA value used in the first cell; receiving an offset value for computing the TA value in the second cell based on the previous TA value used in the first cell; or initiating a contention based random access (CBRA) procedure to acquire the TA value.

In aspects, the UE receives a message from the first cell indicating whether the TA value is to be provided in relation to a cell switch command (CSC).

FIG. 13 is a diagram 1300 illustrating an example hardware implementation for a UE apparatus 1302. The UE apparatus 1302 may be the UE 102, a component of the UE 102, or may implement UE functionality. The UE apparatus 1302 may include an application processor 1306, which may have on-chip memory 1306'. In examples, the application processor 1306 may be coupled to a secure digital (SD) card 1308 and/or a display 1310. The application processor 1306 may also be coupled to a sensor(s) module 1312, a power supply 1314, an additional module of memory 1313, a camera 1318, and/or other related components. For example, the sensor(s) module 1312 may control a barometric pressure sensor/altimeter, a motion sensor such as an inertial management unit (IMU), a gyroscope, accelerometer(s), a light detection and ranging (LIDAR) device, a radio-assisted detection and ranging (RADAR) device, a sound navigation and ranging (SONAR) device, a magnetometer, an audio device, and/or other technologies used for positioning.

The UE apparatus 1302 may further include a wireless baseband processor 1313, which may be referred to as a modem. The wireless baseband processor 1313 may have on-chip memory 1313'. Along with, and similar to, the application processor 1306, the wireless baseband processor 1313 may also be coupled to the sensor(s) module 1312, the power supply 1314, the additional module of memory 1313, the camera 1318, and/or other related components. The wireless baseband processor 1313 may be additionally coupled to one or more subscriber identity module (SIM) card(s) 1320 and/or one or more transceivers 1330 (e.g., wireless RF transceivers).

Within the one or more transceivers 1330, the UE apparatus 1302 may include a Bluetooth module 1332, a WLAN module 1334, an SPS module 1336 (e.g., GNSS module), and/or a cellular module 1338. The Bluetooth module 1332, the WLAN module 1334, the SPS module 1336, and the cellular module 1338 may each include an on-chip transceiver (TRX), or in some cases, just a transmitter (TX) or just a receiver (RX). The Bluetooth module 1332, the WLAN module 1334, the SPS module 1336, and the cellular module 1338 may each include dedicated antennas and/or utilize antennas 1340 for communication with one or more other nodes. For example, the UE apparatus 1302 may communicate through the transceiver(s) 1330 via the antennas 1340 with another UE 102 (e.g., sidelink communication) and/or with a network entity 104 (e.g., uplink/downlink communication), where the network entity 104 may correspond to a base station or a unit of the base station, such as the RU 106, the DU 108, or the CU 110.

The wireless baseband processor 1313 and the application processor 1306 may each include a computer-readable medium / memory 1313', 1306', respectively. The additional module of memory 1313 may also be considered a computer-readable medium / memory. Each computer-readable medium / memory 1313', 1306', 1313 may be non-transitory. The wireless baseband processor 1313 and the application processor 1306 may each be responsible for general processing, including execution of software stored on the computer-readable medium / memory 1313', 1306', 1313. The software, when executed by the wireless baseband processor 1313 / application processor 1306, causes the wireless baseband processor 1313 / application processor 1306 to perform the various functions described herein. The computer-readable medium / memory may also be used for storing data that is manipulated by the wireless baseband processor 1313 / application processor 1306 when executing the software. The wireless baseband processor 1313 / application processor 1306 may be a component of the UE 102. The UE apparatus 1302 may be a processor chip (e.g., modem and/or application) and include just the wireless baseband processor 1313 and/or the application processor 1306. In other examples, the UE apparatus 1302 may be the entire UE 102 and include the additional modules of the apparatus 1302.

The TA value manager 140 may perform various operations and procedures above for acquiring TA values and be within the application processor 1306 (e.g., at 140a), the wireless baseband processor 1313 (e.g., at 140b), or both the application processor 1306 and the wireless baseband processor 1313. The TA value manager 140a-140b may be one or more hardware components specifically configured to carry out the stated processes/algorithm, implemented by one or more processors configured to perform the stated processes/algorithm, stored within a computer-readable medium for implementation by the one or more processors, or a combination thereof.

The UE apparatus 1302 may include a variety of components configured for various functions. In examples, the UE apparatus 1302, and in particular the wireless baseband processor 1313 and/or the application processor 1306, includes means for receiving, from a network entity, a wireless signal indicating a configuration of a beam pool to a plurality of UEs having a leader UE, wherein the configuration of the beam pool comprises respective beam information of a plurality of beams for the plurality of UEs to receive transmissions from the network entity via a common one of the plurality of beams; and means for transmitting, to the network entity, a feedback associated with the common one of the plurality of beams. The means may be the TA value manager 140a-140b of the UE apparatus 1302 configured to perform the functions recited by the means.

FIG. 14 is a diagram 1400 illustrating an example hardware implementation for one or more network entities 104. The one or more network entities 104 may be a base station, a component of a base station, or may implement base station functionality. The one or more network entities 104 may include, or may correspond to, at least one of the RU 106, the DU, 108, or the CU 110. The CU 110 may include a CU processor 1446, which may have on-chip memory 1446'. In some aspects, the CU 110 may further include an additional module of memory 1456 and/or a communications interface 1448, both of which may be coupled to the CU processor 1446. The CU 110 may communicate with the DU 108 through a midhaul link 132, such as an F1 interface between the communications interface 1448 of the CU 110 and a communications interface 1428 of the DU 108.

The DU 108 may include a DU processor 1413, which may have on-chip memory 1413'. In some aspects, the DU 108 may further include an additional module of memory 1436 and/or the communications interface 1428, both of which may be coupled to the DU processor 1413. The DU 108 may communicate with the RU 106 through a fronthaul link 130 between the communications interface 1428 of the DU 108 and a communications interface 1408 of the RU 106.

The RU 106 may include an RU processor 1406, which may have on-chip memory 1406'. In some aspects, the RU 106 may further include an additional module of memory 1413, the communications interface 1408, and one or more transceivers 1430, all of which may be coupled to the RU processor 1406. The RU 106 may further include antennas 1440, which may be coupled to the one or more transceivers 1430, such that the RU 106 may communicate through the one or more transceivers 1430 via the antennas 1440 with the UE 102.

The on-chip memory 1406', 1413', 1446' and the additional modules of memory 1413, 1436, 1456 may each be considered a computer-readable medium / memory. Each computer-readable medium / memory may be non-transitory. Each of the processors 1406, 1413, 1446 is responsible for general processing, including execution of software stored on the computer-readable medium / memory. The software, when executed by the corresponding processor(s) 1406, 1413, 1446 causes the processor(s) 1406, 1413, 1446 to perform the various functions described herein. The computer-readable medium / memory may also be used for storing data that is manipulated by the processor(s) 1406, 1413, 1446 when executing the software. In examples, the TA value manager 150 may sit at any of the one or more network entities 104, such as at the CU 110; both the CU 110 and the DU 108; each of the CU 110, the DU 108, and the RU 106; the DU 108; both the DU 108 and the RU 106; or the RU 106.

The TA value manager 150 may perform various operations and procedures above for providing or indicating TA values and be within one or more processors of the one or more network entities 104, such as the RU processor 1406 (e.g., at 150a), the DU processor 1413 (e.g., at 150b), and/or the CU processor 1446 (e.g., at 150c). The TA value manager 150a-150c may be one or more hardware components specifically configured to carry out the stated processes/algorithm, implemented by one or more processors 1406, 1413, 1446 configured to perform the stated processes/algorithm, stored within a computer-readable medium for implementation by the one or more processors 1406, 1413, 1446, or a combination thereof.

The one or more network entities 104 may include a variety of components configured for various functions. In examples, the one or more network entities 104 include means for group-casting a wireless signal indicating a configuration of a beam pool to a plurality of user equipments, UEs, wherein the configuration of the beam pool comprises respective beam information of a plurality of beams for the plurality of UEs to receive transmissions from the network entity via a common one of the plurality of beams, and wherein one of the plurality of UEs is a leader UE; and means for receiving, from the leader UE, a feedback associated with the common one of the plurality of beams. The means may be the TA value manager 150a-150c of the one or more network entities 104 configured to perform the functions recited by the means.

The specific order or hierarchy of blocks in the processes and flowcharts disclosed herein is an illustration of example approaches. Hence, the specific order or hierarchy of blocks in the processes and flowcharts may be rearranged. Some blocks may also be combined or deleted. Dashed lines may indicate example/optional elements of the diagrams. The accompanying method claims present elements of the various blocks in an example order, and are not limited to the specific order or hierarchy presented in the claims, processes, and flowcharts.

The detailed description set forth herein describes various configurations in connection with the drawings and does not represent the only configurations in which the concepts described herein may be practiced. The detailed description includes specific details for the purpose of providing a thorough explanation of various concepts. However, these concepts may be practiced without these specific details. In some instances, well known structures and components are shown in block diagram form in order to avoid obscuring such concepts.

Aspects of wireless communication systems, such as telecommunication systems, are presented with reference to various apparatuses and methods. These apparatuses and methods are described in the following detailed description and are illustrated in the accompanying drawings by various blocks, components, circuits, processes, call flows, systems, algorithms, etc. (collectively referred to as "elements"). These elements may be implemented using electronic hardware, computer software, or combinations thereof. Whether such elements are implemented as hardware or software depends upon the particular application and design constraints imposed on the overall system.

An element, or any portion of an element, or any combination of elements may be implemented as a "processing system" that includes one or more processors. Examples of processors include microprocessors, microcontrollers, graphics processing units (GPUs), central processing units (CPUs), application processors, digital signal processors (DSPs), reduced instruction set computing (RISC) processors, systems-on-chip (SoC), baseband processors, field programmable gate arrays (FPGAs), programmable logic devices (PLDs), state machines, gated logic, discrete hardware circuits, and other similar hardware configured to perform the various functionality described throughout this disclosure. One or more processors in the processing system may execute software, which may be referred to as software, firmware, middleware, microcode, hardware description language, or otherwise. Software_shall be construed broadly to mean instructions, instruction sets, code, code segments, program code, programs, subprograms, software components, applications, software applications, software packages, routines, subroutines, objects, executables, threads of execution, procedures, functions, or any combination thereof.

If the functionality described herein is implemented in software, the functions may be stored on, or encoded as, one or more instructions or code on a computer-readable medium, such as a non-transitory computer-readable storage medium. Computer-readable media includes computer storage media and may include a random-access memory (RAM), a read-only memory (ROM), an electrically erasable programmable ROM (EEPROM), optical disk storage, magnetic disk storage, other magnetic storage devices, combinations of these types of computer-readable media, or any other medium that may be used to store computer executable code in the form of instructions or data structures that may be accessed by a computer. Storage media may be any available media that may be accessed by a computer.

Aspects, implementations, and/or use cases described herein may be implemented across many differing platform types, devices, systems, shapes, sizes, and packaging arrangements. For example, the aspects, implementations, and/or use cases may come about via integrated chip implementations and other non-module-component based devices, such as end-user devices, vehicles, communication devices, computing devices, industrial equipment, retail/purchasing devices, medical devices, artificial intelligence (AI)-enabled devices, machine learning (ML)-enabled devices, etc. The aspects, implementations, and/or use cases may range from chip-level or modular components to non-modular or non-chip-level implementations, and further to aggregate, distributed, or original equipment manufacturer (OEM) devices or systems incorporating one or more techniques described herein.

Devices incorporating the aspects and features described herein may also include additional components and features for the implementation and practice of the claimed and described aspects and features. For example, transmission and reception of wireless signals necessarily includes a number of components for analog and digital purposes, such as hardware components, antennas, RF-chains, power amplifiers, modulators, buffers, processor(s), interleavers, adders/summers, etc. Techniques described herein may be practiced in a wide variety of devices, chip-level components, systems, distributed arrangements, aggregated or disaggregated components, end-user devices, etc., of varying configurations.

The description herein is provided to enable a person skilled in the art to practice the various aspects described herein. Various modifications to these aspects will be readily apparent to those skilled in the art, and the generic principles defined herein may be applied to other aspects. Thus, the claims are not limited to the aspects described herein, but are to be interpreted in view of the full scope of the present disclosure consistent with the language of the claims.

Reference to an element in the singular does not mean "one and only one" unless specifically stated, but rather "one or more." Terms such as "if," "when," and "while" do not imply an immediate temporal relationship or reaction. That is, these phrases, e.g., "when," do not imply an immediate action in response to or during the occurrence of an action, but simply imply that if a condition is met then an action will occur, but without requiring a specific or immediate time constraint for the action to occur. The terms "may", "might", and "may", as used in this disclosure, often carry certain connotations. For example, "may" refers to a permissible feature that may or may not occur, "might" refers to a feature that probably occurs, and "may" refers to a capability (e.g., capable of). The phrase "For example" often carries a similar connotation to "may" and, therefore, "may" is sometimes excluded from sentences that include "for example" or other similar phrases.

Unless specifically stated otherwise, the term "some" refers to one or more. Combinations such as "at least one of A, B, or C" or "one or more of A, B, or C" include any combination of A, B, and/or C, such as A and B, A and C, B and C, or A and B and C, and may include multiples of A, multiples of B, and/or multiples of C, or may include A only, B only, or C only. Sets may be interpreted as a set of elements where the elements number one or more.

Unless otherwise specifically indicated, ordinal terms such as "first" and "second" do not necessarily imply an order in time, sequence, numerical value, etc., but are used to distinguish between different instances of a term or phrase that follows each ordinal term. Reference numbers, as used in the specification and figures, are sometimes cross-referenced among drawings to denote same or similar features. A feature that is exactly the same in multiple drawings may be labeled with the same reference number in the multiple drawings. A feature that is similar among the multiple drawings, but not exactly the same, may be labeled with reference numbers that have different leading numbers, but have one or more of the same trailing numbers (e.g., 206, 306, 406, etc., may refer to similar features in the drawings). Sometimes an "X" is used to universally denote multiple variations of a feature. For instance, "X06" may universally refer to all reference numbers that end in "06" (e.g., 206, 306, 406, etc.).

Structural and functional equivalents to elements of the various aspects described throughout this disclosure that are known or later come to be known to those of ordinary skill in the art are expressly incorporated herein by reference and are encompassed by the claims. The words "module," "mechanism," "element," "device," and the like may not be a substitute for the word "means." As such, no claim element is to be construed as a means plus function unless the element is expressly recited using the phrase "means for." As used herein, the phrase "based on" shall not be construed as a reference to a closed set of information, one or more conditions, one or more factors, or the like. In other words, the phrase "based on A", where "A" may be information, a condition, a factor, or the like, shall be construed as "based at least on A" unless specifically recited differently.

The following examples are illustrative only and may be combined with other examples or teachings described herein, without limitation.

### Examples

Example 1. A method for wireless communications by a UE, the method comprising:
   receiving, from a first cell, a physical downlink control channel (PDCCH) order triggering a random access (RA) procedure associated with a second cell;
   acquiring a timing advance (TA) value based on the PDCCH order regarding the second cell by skipping an RA response (RAR) associated with the RA procedure; and
   transmitting, based on the TA value, an uplink transmission to the second cell.
Example 2. The method of Example 1, wherein acquiring the TA value comprises:
   receiving a cell switch command (CSC) from the first cell during a lower layer triggered mobility (LTM) operation, wherein the CSC provides the TA value.
Example 3. The method of Example 2, wherein the CSC further provides an additional TA value when the second cell supports multi-TRP (mTRP) two-timing-advance (2TA) operations, wherein the UE maintains two respective TA values with the first TRP and the second TRP.
Example 4. The method of Example 2, wherein the first cell comprises a source cell and the second cell comprises a target cell or a candidate cell for the LTM operation.
Example 5. The method of Example 1, wherein acquiring the TA value comprises:
   receiving, from the first cell, a media access control (MAC) control element (CE) for performing multi-TRP (mTRP) two-timing-advance (2TA) operations, wherein the MAC-CE indicates at least the TA value for the mTRP 2TA operations, wherein the first cell comprises a serving cell and the second cell comprises a neighboring cell.
Example 6. The method of Example 1, further comprising:
   receiving the RAR or a media access control (MAC) control element (CE) from the second cell, the RAR or the MAC CE carrying an absolute value, and
   using the absolute value as the TA value for the second cell when the TA value is not acquired otherwise.
Example 7. The method of any of Examples 1 to 5, further comprising:
   transmitting an RA preamble at power ramping levels associated with the second cell.
Example 8. The method of Example 7, wherein the power ramping levels are based on at least one of:
   a received target power at the second cell;
   a power ramping step;
   a priority of the power ramping step; or
   a power ramping counter.
Example 9. The method of any of Examples 1-8, further comprising:
   transmitting, to the first cell, a message indicating a capability of being configured for LTM and mTRP 2TA operations.
Example 10. The method of Example 9, further comprising:
   receiving a physical random access channel (PRACH) in a radio resource control (RRC) message for neighboring cells corresponding to additional one or more physical cell identifiers (PCIs).
Example 11. The method of Example 8, further comprising:
   receiving, a physical random access channel (PRACH) in a radio resource control (RRC) message for candidate cells including the second cell.
Example 12. The method of any of Examples 1 to 11, wherein the PDCCH provides an explicit or implicit indication that the PDCCH is applicable in the first cell or the second cell.
Example 13. The method of Example 12, wherein the explicit indication of the PDCCH comprises a field indicating a subset of available cells of the network entity.
Example 14. The method of any of Examples 1 to 13, wherein the PDCCH triggers the RA procedure without including an uplink indicator field or a supplemental uplink indicator field.
Example 15. The method of any of Examples 1 to 13, wherein the PDCCH includes an uplink indicator field or a supplemental uplink indicator field, and the method further comprising:
   ignoring information in the uplink indicator field or the supplemental uplink indicator field based on a configuration by the network entity.
Example 16. The method of any of Examples 1 to 13, wherein the PDCCH includes an uplink indicator field or a supplemental uplink indicator field, and the method further comprising:
   interpreting the uplink indicator field or the supplemental uplink indicator field based on whether the PDCCH is for the first cell or the second cell;
   upon determining that the PDCCH is for the first cell, interpreting uplink configuration for the first cell based on information in the uplink indicator field and the supplemental uplink indicator field;
   upon determining that the PDCCH is for the second cell, interpreting uplink configuration for the second cell based on information in the uplink indicator field and the supplemental uplink indicator field; or
   upon determining that the PDCCH is for the second cell, interpreting uplink configuration for the second cell based on information in the uplink indicator field and interpreting uplink configuration for the first cell based on information in the supplemental uplink indicator field.
Example 17. The method of any of Examples 1 to 16, further comprising:
   completing the RA procedure without receiving the RAR, wherein the completing the RA procedure is indicated by:
   receiving a physical downlink shared channel (PDSCH) that schedules a cell switch command (CSC) or a media access control (MAC) control element (CE) that includes the TA value; or
   transmitting an RA preamble.
Example 18. The method of any one of Examples 1 to 17, further comprising:
   receiving an action time for the transmitting of the uplink transmission based on the TA value, wherein the action time is carried by a downlink control information (DCI) or media access control (MAC) control element (CE).
Example 19. The method of any one of Examples 1 to 17, wherein transmitting the uplink transmission is immediately subsequent to completing the RA procedure.
Example 20. The method of Example 1, further comprising:
   discarding the TA value when the UE does not receive a cell switch command (CSC) regarding the second cell of the network entity.
Example 21. The method of Example 20, further comprising:
   receiving a validation window from the first cell, wherein discarding the TA value comprises not receiving the CSC within the validation window.
Example 22. The method of Example 21, further comprising:
   starting the validation window after:
   a last symbol of a downlink transmission that indicates the TA value; or
   transmitting a feedback to the downlink transmission that indicates the TA value.
Example 23. The method of Example 1, further comprising:
   determining whether to keep or discard the TA value regardless of receiving a cell switch command (CSC) regarding the second cell of the network entity.
Example 24. The method of Example 1, wherein acquiring the TA value comprises at least one of:
   applying a default TA value preconfigured in the UE;
   reusing a previous TA value used in the first cell;
   receiving an offset value for computing the TA value in the second cell based on the previous TA value used in the first cell; or
   initiating a contention based random access (CBRA) procedure to acquire the TA value.
Example 25. The method of Example 24, further comprising:
   receiving a message from the first cell indicating whether the TA value is to be provided in relation to a cell switch command (CSC).
Example 26. A method for wireless communications by a first cell and a second cell, the method comprising:
   sending, by the first cell to a user equipment (UE), a physical downlink control channel (PDCCH) order triggering a random access (RA) procedure associated with the second cell; and
   receiving, at the second cell, an uplink transmissions from the UE, the uplink transmissions applying a timing advance (TA) value acquired based on the PDCCH order regarding the second cell by skipping an RA response (RAR) associated with the RA procedure.
Example 27. The method of Example 26, further comprising:
   transmitting, to the UE, a cell switch command (CSC) from the first cell during a lower layer triggered mobility (LTM) operation, wherein the CSC provides the TA value.
Example 28. The method of Example 27, wherein the CSC further provides an additional TA value when the second cell supports multi-TRP (mTRP) two-timing-advance (2TA) operations, wherein the UE maintains two respective TA values with the first TRP and the second TRP.
Example 29. The method of Example 27, wherein the first cell comprises a source cell and the second cell comprises a target cell or a candidate cell for the LTM operation.
Example 30. The method of Example 26, further comprising:
   transmitting, by the first cell to the UE, a media access control (MAC) control element (CE) for performing multi-TRP (mTRP) two-timing-advance (2TA) operations, wherein the MAC-CE indicates at least the TA value for the mTRP 2TA operations, wherein the first cell comprises a serving cell and the second cell comprises a neighboring cell.
Example 31. The method of Example 26, further comprising:
   transmitting the RAR or a media access control (MAC) control element (CE) from the second cell, the RAR or the MAC CE carrying an absolute value for the UE to use as the TA value for the second cell when the UE does not acquire the TA value otherwise.
Example 32. The method of any of Examples 26 to 30, further comprising:
   receiving, at the first cell from the UE, an RA preamble at power ramping levels associated with the second cell.
Example 33. The method of Example 32, wherein the power ramping levels are based on at least one of:
   a received target power at the second cell;
   a power ramping step;
   a priority of the power ramping step; or
   a power ramping counter.
Example 34. The method of any of Examples 26-33, further comprising:
   receiving, at the first cell from the UE, a message indicating a capability of being configured for LTM and mTRP 2TA operations.
Example 35. The method of Example 34, further comprising:
   transmitting a physical random access channel (PRACH) in a radio resource control (RRC) message for neighboring cells corresponding to additional one or more physical cell identifiers (PCIs).
Example 36. The method of Example 33, further comprising:
   transmitting, a physical random access channel (PRACH) in a radio resource control (RRC) message for candidate cells including the second cell.
Example 37. The method of any of Examples 26 to 36, wherein the PDCCH provides an explicit or implicit indication that the PDCCH is applicable in the first cell or the second cell.
Example 38. The method of Example 37, wherein the explicit indication of the PDCCH comprises a field indicating a subset of available cells of the network entity.
Example 39. The method of any of Examples 26 to 38, wherein the PDCCH triggers the RA procedure without including an uplink indicator field or a supplemental uplink indicator field.
Example 40. The method of any of Examples 26 to 38, wherein the PDCCH includes an uplink indicator field or a supplemental uplink indicator field, and the method further comprising:
   ignoring information in the uplink indicator field or the supplemental uplink indicator field based on a configuration by the network entity.
Example 41. The method of any one of Examples 26 to 40, further comprising:
   transmitting, to the UE, an action time for the uplink transmission based on the TA value, wherein the action time is carried by a downlink control information (DCI) or media access control (MAC) control element (CE).
Example 42. The method of any one of Examples 26 to 41, wherein receiving the uplink transmission is immediately subsequent to completing the RA procedure.
Example 43. The method of Example 26, further comprising:
   transmitting a validation window from the first cell to the UE, wherein the UE discards the TA value when the UE does not receive the CSC within the validation window.
Example 44. The method of Example 26, further comprising:
   transmitting a message by the first cell to the UE indicating whether the TA value is to be provided in relation to a cell switch command (CSC).
Example 45. An apparatus for wireless communication comprising a transceiver, a memory, and a processor coupled to the memory and the transceiver, the apparatus being configured to implement a method as in any of Examples 1-44.

## Claims

1. A method of wireless communication at a user equipment, UE, (102), comprising:
receiving (1008), from a network entity (104), a physical downlink control channel, PDCCH, order triggering a random access, RA, procedure for a cell, the PDCCH order including:
an uplink/supplementary uplink, UL/SUL, indicator field indicating a non-supplementary uplink or a supplementary uplink, and
a field indicating a subset of available cells; and
transmitting (1010), to the network entity (104), a physical random access channel, PRACH, based on a value of the UL/SUL indicator field and the field indicating the subset of available cells.

2. The method of claim 1, wherein the field indicating the subset of available cells indicates a candidate cell.

3. The method of claim 2, wherein the UL/SUL indicator field indicates the non-supplementary uplink, and wherein the transmitting (1010) the PRACH includes transmitting the PRACH in a non-supplementary uplink carrier in the candidate cell.

4. The method of claim 2, wherein the UL/SUL indicator field indicates the supplementary uplink, and wherein the transmitting (1010) the PRACH includes transmitting the PRACH in a supplementary uplink carrier in the candidate cell.

5. The method of any of claims 2-4, further comprising:
receiving (1012), from the network entity (104), a timing advance, TA, value for the candidate cell; and
applying (1014) the TA value for the candidate cell.

6. The method of claim 1, wherein the field indicating the subset of available cells indicates a serving cell.

7. The method of claim 6, wherein the UL/SUL indicator field indicates the non-supplementary uplink, and wherein the transmitting (1010) the PRACH includes transmitting the PRACH in a non-supplementary uplink carrier in the serving cell.

8. The method of claim 6, wherein the UL/SUL indicator field indicates the supplementary uplink, and wherein the transmitting (1010) the PRACH includes transmitting the PRACH in a supplementary uplink carrier in the serving cell.

9. The method of any of claims 1-8, further comprising:
reporting (1002), to the network entity (104), a UE capability for supporting a lower layer triggered mobility, LTM, procedure.

10. The method of any of claims 1-9, further comprising:
receiving (1004), from the network entity (104), a radio resource control, RRC, configuration configuring one or more candidate cells; and
receiving (1006), from the network entity (104), an RRC configuration configuring one or more PRACH configurations for the one or more candidate cells.

11. A method of wireless communication at a network entity (104), comprising:
transmitting (1008), to a user equipment, UE, (102), a physical downlink control channel, PDCCH, order triggering a random access, RA, procedure for a cell, the PDCCH order including:
an uplink/supplementary uplink, UL/SUL, indicator field indicating a non-supplementary uplink or a supplementary uplink, and
a field indicating a subset of available cells; and
receiving (1010), from the UE (102), a physical random access channel, PRACH, based on a value of the UL/SUL indicator field and the field indicating the subset of available cells.

12. The method of claim 11, wherein the field indicating the subset of available cells indicates a candidate cell or a serving cell, wherein the UL/SUL indicator field indicates the non-supplementary uplink, and wherein the receiving (1010) the PRACH includes receiving the PRACH in a non-supplementary uplink carrier in the candidate cell or the serving cell.

13. The method of claim 11, wherein the field indicating the subset of available cells indicates a candidate cell or a serving cell, wherein the UL/SUL indicator field indicates the supplementary uplink, and wherein the receiving (1010) the PRACH includes receiving the PRACH in a supplementary uplink carrier in the candidate cell or the serving cell.

14. The method of any of claims 11-13, further comprising:
transmitting (1004), to the UE (102), a radio resource control, RRC, configuration configuring one or more candidate cells; and
transmitting (1006), to the UE (102), an RRC configuration configuring one or more PRACH configurations for the one or more candidate cells.

15. An apparatus for wireless communication comprising a memory, a transceiver, and a processor coupled to the memory and the transceiver, the apparatus being configured to implement a method as in any of claims 1-14.
